(19) **Europäisches Patentamt**
**European Patent Office**
**Office européen des brevets**

(11) **EP 1 779 181 B1**

(12) **FASCICULE DE BREVET EUROPEEN**

(45) Date de publication et mention
de la délivrance du brevet:
**22.07.2009 Bulletin 2009/30**

(51) Int Cl.:
***G02B 27/22*** *(2006.01)*      ***H04N 13/00*** *(2006.01)*

(21) Numéro de dépôt: **05793248.5**

(86) Numéro de dépôt international:
**PCT/FR2005/001994**

(22) Date de dépôt: **29.07.2005**

(87) Numéro de publication internationale:
**WO 2006/024764 (09.03.2006 Gazette 2006/10)**

(54) **PROCEDE D'AFFICHAGE D'UNE IMAGE AUTOSTEREOSCOPIQUE A N POINTS DE VUE.**

VERFAHREN ZUM ANZEIGEN EINES AUTOSTEREOSKOPISCHEN BILDES MIT N-BLICKPUNKTEN

METHOD FOR DISPLAYING AN AUTOSTEREOSCOPIC IMAGE HAVING N VIEWPOINTS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.07.2004 FR 0408458**

(43) Date de publication de la demande:
**02.05.2007 Bulletin 2007/18**

(73) Titulaire: **ALIOSCOPY**
**75020 Paris (FR)**

(72) Inventeur: **Allio, Pierre**
**75020 Paris (FR)**

(74) Mandataire: **Jacquard, Philippe Jean-Luc et al**
**Cabinet Orès**
**36, rue de St Pétersbourg**
**75008 Paris (FR)**

(56) Documents cités:
**EP-A- 0 791 847          WO-A-00/10332**
**WO-A-20/04043079**

- **BERKEL VAN C ET AL: "DESIGN AND APPLICATIONS OF MULTIVIEW 3D-LCD" PROCEEDINGS OF THE 16TH. INTERNATIONAL DISPLAY RESEARCH CONFERENCE. EURODISPLAY 96 BIRMINGHAM, OCT. 1 - 3, 1996, EURODISPLAY. SID'S INTERNATIONAL DISPLAY RESEARCH CONFERENCE, vol. CONF. 16, 1 octobre 1996 (1996-10-01), pages 109-112, XP001032159 ISSN: 1083-1312**

**Description**

La présente invention concerne un procédé d'affichage d'une image autostéréoscopique à N points de vue.

On connaît du Brevet EP 697 163 un procédé d'affichage d'une image autostéréoscopique sur un écran dans lequels les points de couleur (typiquement rouge, vert, bleu) des pixels de l'image autostéréoscopique sont permutés de sorte que les p points de couleur de chaque pixel de chaque point de vue soient vus dans p éléments successifs d'un réseau de visualisation, par exemple un réseau lenticulaire.

Dans la Demande de Brevet PCT WO 00/10332 publiée le 24 Février 2000, chaque pixel de l'image autostéréoscopique à afficher est composé de p points de couleur provenant de p pixels différents d'une image autostéréoscopique de définition supérieure, ce qui permet de compenser au moins partiellement la perte de définition due à la présence de N points de vue.

Dans les écrans commercialement disponibles, il existe entre les pixels des espaces non éclairés qui produisent lors de la visualisation autostéréoscopique à l'aide d'un réseau lenticulaire ou d'un réseau de parallaxe des barres noires qui deviennent perceptibles.

En outre, l'effet cumulatif de la répartition des couleurs des points de couleur visibles verticalement dans les colonnes de l'image tend à produire des aplats de couleur sous forme de bandes verticales de couleur alternativement rouge, verte ou bleue, qui peuvent être perçues comme telles dans certaines zones de l'image.

L'idée de base de l'invention est que pour des lignes successives lors de l'affichage sur l'écran, chaque groupe de p points de couleur constituant un pixel donné de l'image commence par une couleur différente sur p lignes successives de l'image affichée. L'invention s'applique à l'une ou l'autre des techniques d'affichage décrites dans les deux Demandes identifiées ci-dessus.

L'invention concerne ainsi un procédé d'affichage d'une image autostéréoscopique à N points de vue dont chacun comprend p pixels, sur au moins une partie d'un écran comportant des pixels d'affichage disposés selon des lignes et des colonnes, chaque pixel d'affichage comprenant un premier, un deuxième et un troisième points de couleur alignés sur une même ligne et dont chacun est de couleur différentes (R,V,B), le premier pixel d'affichage d'une ligne étant constitué par les points de couleur de rang 1 à 3, le deuxième pixel d'affichage d'une ligne étant constitué par les points de couleur de rang 4 à 6, ... le pixel d'affichage de rang q d'une ligne étant constitué par les points de couleur de rang (3q - 2) à 3q, procédé dans lequel N est un entier qui est supérieur à 1 et dans lequel les pixels d'une image autostéréoscopique à afficher sont affichés de telle sorte que les 3 points de couleur de chaque pixel d'affichage affichent 3 points de couleur de composante de couleur homologue de 3 pixels différents de l'image autostéréoscopique provenant d'au moins deux pixels de même rang d'au moins deux points de vue différents caractérisé en ce que, pour au moins un groupe de trois lignes successives de l'image comprenant une première, une deuxième et une troisième ligne, ladite répartition spatiale des 3 points de couleur est décalée d'au moins un pas correspondant à un point de couleur lorsqu'on passe d'une ligne du groupe à une ligne adjacente.

Selon une première et une deuxième variante, N n'est pas un multiple de 3 et les pixels de l'image autostéréoscopique à afficher sont affichés en répartissant spatialement les trois points de couleur de chaque pixel de l'image autostéréoscopique avec un pas égal à N entre les trois points de couleur de composante de couleur homologue d'au moins deux pixels d'affichage différents. Ainsi, les trois points de couleur de chaque pixel sont vus dans trois lenticules successifs d'un réseau lenticulaire (ou de parallaxe).

Selon un premier mode de réalisation de la première variante, le procédé est caractérisé en ce que N = 2 et en ce que :

- la première ligne d'un groupe de trois lignes de l'écran affiche successivement le premier point de couleur (11 R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (11 B) du premier pixel de la première ligne du premier point de vue de l'image autostéréoscopique, et ainsi de suite jusqu'au troisième point de couleur (2pB) du p^ème pixel qui est le dernier pixel de la première ligne du deuxième point de vue de l'image autostéréoscopique.
- la deuxième ligne d'un groupe de trois lignes de l'écran affiche successivement le deuxième point de couleur du premier pixel (11V) de la deuxième ligne du premier point de vue de l'image autostéréoscopique, le troisième point de couleur du premier pixel (21B) de la deuxième ligne du deuxième point de vue de l'image autostéréoscopique, le premier point de couleur (11 R) du premier pixel de la deuxième ligne du premier point de vue de l'image autostéréoscopique, et ainsi de suite jusqu'au premier point de couleur (2pR) du p^ème pixel de la deuxième ligne du deuxième point de vue de l'image autostéréoscopique.
- la troisième ligne d'un groupe de trois lignes de l'écran affiche successivement le troisième point de couleur (11B) du premier pixel de la troisième ligne du premier point de vue de l'image autostéréoscopique, le premier point de couleur (21 R) du premier pixel de la troisième ligne du deuxième point de vue de l'image autostéréoscopique, le deuxième point de couleur (11V) du premier pixel de la troisième ligne du premier point de vue de l'image autostéréoscopique, et ainsi de suite jusqu'au deuxième point de couleur (2pV) du p$^{ème}$ pixel de la troisième ligne du deuxième point de vue de l'image autostéréoscopique.

Selon un deuxième mode de réalisation de cette première variante, le procédé est caractérisé en ce que N > 3 et en ce que :

- la première ligne d'un dit groupe de trois lignes de l'écran affiche successivement le premier point de couleur (11 R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (31 B) du premier pixel de la première ligne du troisième point de vue de l'image autostéréoscopique, et ainsi de suite jusqu'au troisième point de couleur (N1B) du premier pixel du N$^{ème}$ point de vue, cette séquence se répétant ensuite pour les pixels suivants de l'image autostéréoscopique, à savoir pour le premier point de couleur (12R) du deuxième pixel du premier point de vue de l'image autostéréoscopique, pour le deuxième point de couleur du deuxième pixel du deuxième point de vue de l'image autostéréoscopique, ... pour le troisième point de couleur (N2B) de la première ligne du deuxième pixel du N$^{ème}$ point de vue, jusqu'au dernier point de couleur qui est le troisième point de couleur de la première ligne du q$^{ème}$ pixel du N$^{ème}$ point de vue.
- la deuxième ligne d'un dit groupe de trois lignes affiche successivement le deuxième point de couleur (11V) du premier pixel de la deuxième ligne du premier point de vue de l'image autostéréoscopique, le troisième point de couleur (21 B) du premier pixel de la deuxième ligne du deuxième point de vue de l'image autostéréoscopique, le premier point de couleur (31 R) du premier pixel de la deuxième ligne du troisième point de vue et ainsi de suite jusqu'au premier point de couleur (N1R) du premier pixel de la deuxième ligne du N$^{ème}$ point de vue, cette séquence se répétant ensuite pour les pixels suivants de chacun des points de vue de l'image autostéréoscopique, à savoir avec le deuxième point de couleur (12V) du deuxième pixel du premier point de vue de l'image autostéréoscopique, pour le troisième point de couleur (22B) du deuxième pixel de la deuxième ligne du deuxième point de vue l'image autostéréoscopique, pour le premier point de couleur (32R) du deuxième pixel du troisième point de vue de l'image autostéréoscopie, ... pour le premier point de couleur (N2R) du deuxième pixel de la deuxième ligne N$^{ème}$ point de vue, jusqu'au dernier point couleur qui est le premier point de couleur (NqR) du q$^{ème}$ pixel de la deuxième ligne du N$^{ème}$ point de vue.
- et la troisième ligne d'un dit groupe de trois lignes affiche successivement le troisième point de couleur (11B) du premier pixel de la troisième ligne du premier point de vue, le premier point de couleur (21 R) du premier pixel de la troisième ligne du deuxième point de vue, le deuxième point de couleur (31 V) du premier pixel de la troisième ligne du troisième point de vue et ainsi de suite jusqu'au deuxième point de couleur pour (N1V) du premier pixel de la troisième ligne du N$^{ème}$ point de vue, cette séquence se répétant ensuite pour les pixels suivants de la troisième ligne de chacun des points de vue, à savoir avec le troisième point de couleur (12B) du deuxième pixel de la troisième ligne du premier point de vue, le premier point de couleur (22R) du deuxième pixel de la troisième ligne du deuxième point de vue, le deuxième point de couleur (32V) du deuxième pixel de la troisième ligne du troisième point de vue, .... pour le deuxième point de couleur pour (N2V) du deuxième pixel de la troisième ligne du N$^{ème}$ point de vue, jusqu'au dernier point de couleur qui est le deuxième point de couleur du q$^{ème}$ pixel de la troisième ligne du N$^{ème}$ point de vue.

Cette première variante est adaptée au cas d'écran qui présente des pixels ordonnés différemment selon les lignes.

Le procédé peut être alors caractérisé en ce que l'écran présente au moins un groupe de trois lignes dont les pixels présentent trois points de couleur disposés sur trois colonnes successives de points de couleur, les points de couleur étant permutés d'une ligne à l'autre, la première ligne comportant des pixels d'affichage dont chacun est composé successivement d'un premier point de couleur, d'un deuxième point de couleur et d'un troisième point de couleur, la deuxième ligne comportant des pixels d'affichage dont chacun est composé successivement d'un deuxième point de couleur, d'un troisième point de couleur et d'un premier point de couleur, et la troisième ligne comportant des pixels d'affichage dont chacun est composé successivement d'un troisième point de couleur, d'un- premier point de couleur et d'un deuxième point de couleur.

Dans ce cas, une visualisation peut être obtenue à l'aide d'au moins un réseau sélecteur angulaire ayant un axe principal parallèle aux colonnes, à savoir un réseau lenticulaire placé devant l'écran ou un réseau de parallaxe placé devant l'écran. Dans le cas d'un écran rétro-éclairé (par exemple écran à cristaux liquides), le réseau de parallaxe peut être disposé également entre l'écran et un dispositif d'éclairage.

Selon la deuxième variante, l'écran présente des pixels ordonnés identiquement sur les lignes. Dans ce cas, l'axe principal du réseau sélecteur angulaire placé devant l'écran ou entre l'écran et un dispositif d'éclairage est incliné de manière à être parallèle aux diagonales des points de couleur de l'écran, d'où un décalage d'une ligne à l'autre qui est égal au pas des points de couleur. Le pas PR du réseau sélecteur angulaire permet de couvrir N points de couleur.

Selon un premier mode de réalisation de cette deuxième variante, le procédé est caractérisé en ce que N = 2 et en ce que pour un groupe de 2 lignes comprenant une première et une deuxième lignes, on a :

- la première ligne d'un groupe de deux lignes de l'écran affiche successivement le premier point de couleur (11R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (11B) du premier pixel de la première ligne du premier point de vue de l'image autostéréoscopique, et ainsi de suite jusqu'au troisième point de couleur (2pB) du $p^{ème}$ pixel de la première ligne du deuxième point de vue de l'image autostéréoscopique.
- la deuxième ligne d'un groupe de deux lignes de l'écran affiche successivement le premier point de couleur du premier pixel (21 R) de la deuxième ligne du deuxième point de vue de l'image autostéréoscopique, le deuxième point de couleur du premier pixel (11 V) de la deuxième ligne du premier point de vue de l'image autostéréoscopique, le troisième point de couleur (21B) du premier pixel de la deuxième ligne du deuxième point de vue de l'image autostéréoscopique, et ainsi de suite jusqu'au troisième point de couleur (1pB) du $p^{ème}$ pixel de la deuxième ligne du premier point de vue de l'image autostéréoscopique.

Selon un deuxième mode de réalisation de cette deuxième variante, le procédé est caractérisé en ce que N > 3 et pour un groupe de N lignes comprenant une première, une deuxième et une troisième lignes, .....et une $N^{ème}$ ligne on a :

Pour la première ligne dudit groupe :

- un premier point de couleur (11R, 12R, 13R ....) des pixels de la première ligne d'un dit premier point de vue est affiché sur les points de couleur de rang 1 modulo 3N des pixels d'affichage de la première ligne, un deuxième point de couleur (11V, 12V, 13V ....) des pixels de la première ligne d'un dit premier point de vue est affiché sur les points de couleur de rang 1 + N modulo 3N des pixels d'affichage de la première ligne, et un troisième point de couleur (11 B, 12B, 13B ....) des pixels de la première signe dudit premier point de vue est affiché sur les points de couleur de rang 1 + 2N modulo 3N des pixels d'affichage de la première ligne.
- un deuxième point de couleur (21V, 22V, 23V ....) des pixels de la première ligne d'un dit deuxième point de vue est affiché sur les points de couleur de rang 2 modulo 3N des pixels d'affichage de la première ligne, un troisième point de couleur (21 B, 22B, 23B ....) des pixels de la première ligne dudit deuxième point de vue est affiché sur les points de couleur de rang 2 + N modulo 3N des pixels d'affichage de la première ligne, et un premier point de couleur (21 R, 22R, 23R ....) des pixels de la première ligne dudit deuxième point de vue est affiché sur les points de couleur de rang 2 + 2N modulo 3N des pixels d'affichage de la première ligne.
- un troisième point de couleur des pixels (31B, 32B, 33B ....) de la première ligne d'un dit troisième point de vue est affiché sur les points de couleur de rang 3 modulo 3N des pixels d'affichage de la première ligne, un premier point de couleur (31R, 32R, 33R ....) des pixels de la première ligne dudit troisième point de vue est affiché sur les points de couleur de rang 3 + N modulo 3 N des pixels d'affichage de la première ligne, et un deuxième point de couleur (31V, 32V, 33V ....) des pixels de la première ligne dudit troisième point de vue est affiché sur les points de couleur de rang 3 + 2N modulo 3N des pixels d'affichage de la première ligne, etc...
- et un $R_0(N/3)^{ème}$ point de couleur des pixels de la première ligne du $N^{ème}$ point de vue est affiché sur les points de couleur de rang N modulo 3N des pixels d'affichage de la première ligne, un deuxième point de couleur (N1V, N2V....) pour $R_0(N/3) = 1$ ou un premier point de couleur pour $R_0(N/3) = 2$ des pixels de la première ligne de $N^{ème}$ point de vue est affiché sur les points de couleur de rang 2N modulo 3N des pixels d'affichage de la première ligne, et le troisième point de couleur (N1B) des pixels de la première ligne du $N^{ème}$ point de vue est affiché sur le point de couleur de rang 3N modulo 3N des pixels d'affichage de la première ligne, $R_0(N/3)$ désignant le reste (1 ou 2) de la division de N par 3.

Pour la deuxième ligne dudit groupe :

- un deuxième point de couleur des pixels (11V, 12V, 13V ....) de la deuxième ligne d'un dit premier point de vue est affiché sur les points de couleur de rang 2 modulo 3N des pixels d'affichage de la deuxième ligne, un troisième point de couleur (11B, 12B, 13B ....) des pixels de la deuxième ligne dudit premier point de vue est affiché sur les points de couleur de rang 2 + N modulo 3 N des pixels d'affichage de la deuxième ligne, et un premier point de couleur (11R, 12R, 13R ....) des pixels de la deuxième ligne dudit premier point de vue est affiché sur les points de couleur de rang 2 + 2N modulo 3N des pixels d'affichage de la deuxième ligne.
- un troisième point de couleur (21 B, 22B, 23B ....) des pixels de la deuxième ligne d'un dit deuxième point de vue est affiché sur les points de couleur de rang 3 modulo 3N des pixels d'affichage de la deuxième ligne, un premier point de couleur (21R, 22R, 23R ....) des pixels de la deuxième ligne dudit deuxième point de vue est affiché sur les points de couleur de rang 3 + N modulo 3 N des pixels d'affichage de la deuxième ligne, et un deuxième point de couleur (21V, 22V, 23V ....) des pixels de la deuxième ligne dudit deuxième point de vue est affiché sur les points de couleur de rang 3 + 2N modulo 3N des pixels d'affichage de la deuxième ligne.

- un premier point de couleur (31R, 32R, 33R ....) des pixels de la deuxième ligne d'un dit troisième point de vue est affiché sur les points de couleur de rang 4 modulo 3N des pixels d'affichage de la deuxième ligne, un deuxième point de couleur (31V, 32V, 33V ....) des pixels de la deuxième ligne dudit troisième point de vue est affiché sur les points de couleur de rang 4 + N modulo 3 N des pixels d'affichage de la deuxième ligne, et un troisième point de couleur (31B, 32B, 33B ....) des pixels de la deuxième ligne dudit troisième point de vue est affiché sur les points de couleur de rang 4 + 2N modulo 3N des pixels d'affichage de la deuxième ligne, etc...

- et un premier point de couleur des pixels de la deuxième ligne du $N^{ème}$ point de vue est affiché sur les points de couleur 1 modulo 3N des pixels d'affichage de la deuxième ligne, le deuxième (pour $R_0(N/3)$ = 1) ou le troisième (pour $R_0(N/3)$ = 2) point de couleur pour les pixels de la deuxième ligne de $N^{ème}$ point de vue est affiché sur les points de couleur de rang N + 1 modulo 3N des pixels d'affichage de la deuxième ligne, et le troisième (pour $R_0(N/3)$ = 1) ou le deuxième (pour $R_0(N/3)$ = 2) point de couleur des pixels de la deuxième ligne du $N^{ème}$ point de vue est affiché sur les points de couleur de rang 2N + 1 modulo 2N des pixels d'affichage de la deuxième ligne.

Pour la troisième ligne dudit groupe :

- un troisième point de couleur (11B, 12B, 13B ....) des pixels de la troisième ligne d'un dit premier point de vue est affiché sur les points de couleur de rang 3 modulo 3N des pixels d'affichage de la troisième ligne, un premier point de couleur (11 R, 12R, 13R ....) des pixels de la troisième ligne d'un dit premier point de vue est affiché sur les points de couleur de rang 3 + N modulo 3 N des pixels d'affichage de la troisième ligne, et un deuxième point de couleur (11V, 12V, 13V ....) des pixels de la troisième ligne dudit premier point de vue est affiché sur les points de couleur de rang 1 + 2N modulo 3N des pixels d'affichage de la troisième ligne.

- un premier point de couleur (21 R, 22R, 23R ....) des pixels de la troisième ligne d'un dit deuxième point de vue est affiché sur les points de couleur de rang 4 modulo 3N des pixels d'affichage de la troisième ligne, un deuxième point de couleur (21V, 22V, 23V, ...) des pixels de la troisième ligne dudit deuxième point de vue est affiché sur les points de couleur de rang 4 + N modulo 3 N des pixels d'affichage de la troisième ligne, et un premier point de couleur (21R, 22R, 23R ....) des pixels de la troisième ligne dudit deuxième point de vue est affiché sur les points de couleur de rang 4 + 2N modulo 3N des pixels d'affichage de la troisième ligne.

- un deuxième point de couleur (31V, 32V, 33V ....) des pixels de la troisième ligne d'un dit troisième point de vue est affiché sur les points de couleur de rang 5 modulo 3N des pixels d'affichage de la troisième ligne, un troisième point de couleur (31B, 32B, 33B ....) des pixels de la troisième ligne dudit troisième point de vue est affiché sur les points de couleur de rang 5 + N modulo 3 N des pixels d'affichage de la troisième ligne, et un premier point de couleur (31R, 32R, 33R ....) des pixels de la troisième ligne dudit troisième point de vue est affiché sur les points de couleur de rang 5 + 2N modulo 3N des pixels d'affichage de la troisième ligne, etc...

- et un deuxième point de couleur des pixels de la troisième ligne du $N^{ème}$ point de vue est affiché sur les points de couleur 2 modulo 3N des pixels d'affichage de la troisième ligne, un troisième (pour $R_0(N/3)$ = 1) bu un premier (pour $R_0(N/3)$ = 2) point de couleur des pixels de la troisième ligne du $N^{ème}$ point de vue est affiché sur les points de couleur de rang N + 2 modulo 3N des pixels d'affichage de la troisième ligne, et un premier (pour $R_0(N/3)$ = 1) ou un troisième (pour $R_0(N/3)$ = 2) point de couleur des pixels de la troisième ligne du $N^{ème}$ point de vue est affiché sur le point de couleur de rang 2N + 2 modulo 3N des pixels d'affichage de la troisième ligne,
et ainsi de suite par permutation circulaire jusqu'à la $N^{ème}$ ligne.

Selon une troisième et une quatrième variantes, le procédé est caractérisé en ce que N est un multiple de 3 et en ce que seul un point de couleur de chaque pixel de l'image autostéréoscopique à afficher est utilisé et en ce qu'une première ligne de l'écran affiche successivement le premier point de couleur (11 R) du premier pixel de la première ligne du premier point de vue de l'image autostéréoscopique, le deuxième point de couleur (21V) du premier pixel de la première ligne du deuxième point de vue de l'image autostéréoscopique, et ainsi de suite jusqu'au troisième point de couleur (N1B) du premier pixel de la première ligne du $N^{ème}$ point de vue de l'image autostéréoscopique, la séquence se répétant ensuite pour le deuxième pixel de chaque point de vue de la première ligne de l'image autostéréoscopique et les suivants.

Selon la troisième variante, le procédé est caractérisé en ce que la deuxième ligne d'écran affiche successivement le deuxième point de couleur (11V) du premier pixel de la deuxième ligne du premier point de vue de l'image autostéréoscopique, le troisième point de couleur (21B) du premier pixel de la deuxième ligne du deuxième point de vue de l'image autostéréoscopique, et ainsi de suite jusqu'au premier point de couleur (N1 R) du premier pixel de la deuxième ligne du $N^{ème}$ point de vue de l'image autostéréoscopique, la séquence se répétant ensuite pour le deuxième pixel de chaque point de vue de la deuxième ligne de l'image autostéréoscopique et les suivants, et en ce que la troisième ligne de l'écran affiche successivement le troisième point de couleur (11B) du premier pixel de la troisième ligne du premier point de vue de l'image autostéréoscopique, le premier point de couleur (21 R) du premier pixel de la deuxième ligne du deuxième point de vue de l'image autostéréoscopique, et ainsi de suite jusqu'au deuxième point de couleur (N1V) du premier pixel de la deuxième ligne du N$^{ème}$ point de vue de l'image autostéréoscopique, la séquence se répétant ensuite pour le deuxième pixel de chaque point de vue de la troisième ligne de l'image autostéréoscopique et les suivants, et se répétant également pour les groupes de trois lignes de l'écran qui suivent le groupe constitué par lesdites première, deuxième et troisième lignes de l'écran.

Il peut être caractérisé en ce que l'écran présente au moins un groupe de trois lignes dont les pixels présentent trois points de couleur disposés sur trois colonnes successives de points de couleur, les points de couleur étant permutés d'une ligne à l'autre, la première ligne comportant des pixels d'affichage dont chacun est composé successivement d'un premier point de couleur, d'un deuxième point de couleur et d'un troisième point de couleur, la deuxième ligne comportant des pixels d'affichage dont chacun est composé successivement d'un deuxième point de couleur, d'un troisième point de couleur et d'un premier point de couleur, et la troisième ligne comportant des pixels d'affichage dont chacun est composé successivement d'un troisième point de couleur, d'un premier point de couleur et d'un deuxième point de couleur,

Il peut être caractérisé en ce qu'il met en oeuvre, pour la visualisation de l'image autostéréoscopique sur un écran, un réseau de sélection angulaire, tel qu'un réseau lenticulaire ou un réseau de parallaxe, ayant un axe parallèle aux dites colonnes de points de couleur.

Selon la quatrième variante, le procédé est caractérisé en ce que la deuxième ligne de l'écran affiche successivement à partir de la deuxième position, le deuxième point de couleur (11V) du premier pixel de la deuxième ligne du premier point de vue de l'image autostéréoscopique, le troisième point de couleur (21B) du premier pixel de la deuxième ligne du deuxième point de vue de l'image autostéréoscopique, et ainsi de suite jusqu'au premier point de couleur (N1 R) du premier pixel de la deuxième ligne du N$^{ème}$ point de vue de l'image autostéréoscopique, la séquence se répétant ensuite pour le deuxième pixel de chaque point de vue de la deuxième ligne de l'image autostéréoscopique puis les suivants, et en ce que la troisième ligne de l'écran affiche successivement en troisième position le troisième point de couleur (11 B) du premier pixel de la troisième ligne du premier point de vue l'image autostéréoscopique, le premier point de couleur (21 R) du premier pixel du troisième ligne du deuxième point de vue de l'image autostéréoscopie, et ainsi de suite jusqu'au deuxième point de couleur (N1V) du premier pixel de la troisième ligne du N$^{ème}$ point de vue de l'image autostéréoscopique, la séquence se répétant ensuite pour le deuxième pixel de chaque point de vue de la troisième ligne de l'image autostéréoscopique, puis les suivants.

Il peut être caractérisé en ce qu'il met en oeuvre, pour afficher lesdites images autostéréoscopiques, un écran équipé d'un réseau de sélection angulaire (réseau lenticulaire ou réseau parallaxe) dont les axes sont parallèles à une diagonale des points de couleur et dont le pas PR permet de couvrir N points de couleur.

D'autres caractéristiques et avantages de l'invention apparaîtront mieux à la lecture de la description ci-après, en liaison avec les dessins dans lesquels :

- les figures 1 et 2 illustrent la première variante pour laquelle la permutation des points de couleur selon l'invention pour des lignes successives d'une partie d'un écran ayant des lignes de pixels différentes, par décalage d'un rang des points de couleur d'une ligne à l'autre, la figure 1 correspondant au cas de N = 4 points de vue alors que la figure 2 correspond au cas de N = 8 points de vue.
- les figures 3 à 6 illustrent respectivement pour 4, 5, 7 et 8 points de vue la deuxième variante pour laquelle la permutation des points de couleur selon l'invention pour des lignes successives d'une partie d'un écran ayant des lignes de pixels semblables pour une visualisation à travers un réseau lenticulaire ou un réseau de parallaxe.
- les figures 7a et 7d illustrent la visualisation des 4 points de vue dans le cas de la figure 3.
- les figures 8a à 8h illustrent la visualisation des 8 points de vue dans le cas de la figure 6.
- la figure 9 illustre la première variante dans le cas N = 2
- les figures 10a à 10c illustrent la deuxième variante dans le cas où N = 2, les figures 10b et 10c montant l'affichage respectivement du premier et du deuxième point de vue à travers le réseau disposé en oblique.
- les figures 11 et 12 illustrent la troisième variante respectivement dans le cas de N = 3 points de vue et N = 9 points de vue.
- la figure 13 illustre la quatrième variante dans le cas de N = 3 points de vue.

Sur les dessins, les points de couleur de l'image autostéréoscopique sont identifiés par un indice composite à deux chiffres et une lettre. Le premier chiffre est le numéro du point de vue (compris entre 1 et N). Le deuxième chiffre est le numéro ou rang du pixel. La lettre R, V ou B désigne la couleur (rouge, verte ou bleue) correspondant au point de couleur. La fonction $R_0(N/3)$ désigne le reste de la division de N par 3.

Exemple : 11 R signifie : point de vue n° 1, pixel n° 1, couleur rouge. Le pixel n° 1 du point de vue n° 1 comporte ainsi les points de couleur 11 R, 11 V et 11 B.

32B signifie : point de vue n" 3, pixel n° 2, couleur bleue. Le pixel n° 2 du point de vue n° 3 comporte ainsi les points de couleur 32R, 32V et 32B.

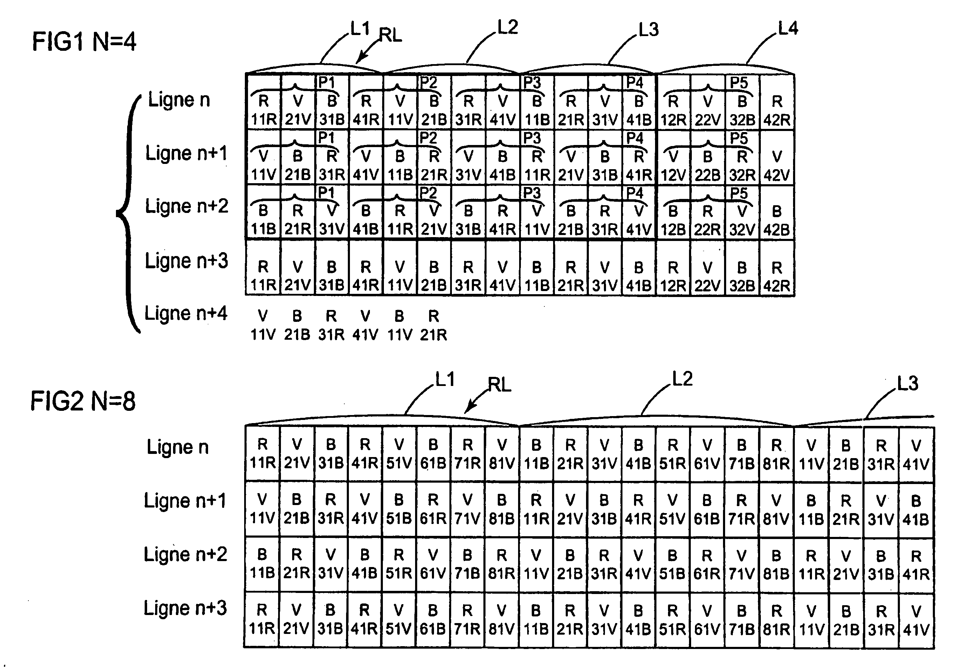

Comme le montre la figure 1, pour N = 4 points de vue, un réseau lenticulaire ou le réseau de parallaxe RL de visualisation présente des éléments, par exemple des lenticules ou des fentes $L_1$, $L_2$ ... dont le pas est égal à celui de quatre points de couleur. L'écran présente des pixels d'affichage P1, P2, ... composés de triplets points de couleur successivement rouge R, vert V, et bleu B pour la ligne n, successivement V, B et R pour la ligne n+ 1, successivement B, R et V pour la ligne n + 2, et de nouveau successivement R, V et B pour la ligne n+ 3.

Il y a donc, d'une ligne à l'autre un décalage d'un pas égal au pas des points de couleur dans la direction des lignes de l'écran pour trois lignes successives.

Les points de couleur de chacun des p pixels de l'image autostéréoscopique sont affichés avec un pas égal à N = 4 fois le pas des points de couleur dans la direction des lignes de l'écran. Pour un affichage sur toute la longueur des lignes, on a p = q'/N, puisque les q' pixels d'affichage se partagent les p pixels des N points de vue. Pour un affichage sur une partie des lignes, p < q'/N.

Les lignes (n + 3), (n + 4) et (n + 5) sont identiques respectivement aux lignes n, à (n + 1) et (n + 2) et ainsi de suite pour les groupes successifs de 3 lignes.

Par exemple, le triplet 11 R, 11 V, 11 B est affiché dans l'ordre 11R, 11V, 11B à la ligne n avec un pas égal à 4, dans l'ordre 11V, 11B et 11R à la ligne n + 1, et dans l'ordre 11B, 11 R et 11 V à la ligne n + 2, et de nouveau dans l'ordre 11 R, 11V, 11B à la ligne n + 3, en raison de la permutation des points de couleur d'une ligne à l'autre de écran.

Par exemple, le triplet 31 R, 31V, 31 B est affiché dans l'ordre 31B, 31R, 31V à la ligne n, dans l'ordre 31R, 31V et 31 B à la ligne n +1, et dans l'ordre 31V, 31 B, 31 R à la ligne n + 2 et de nouveau dans l'ordre 31 R, 31V, 31B à la ligne n + 3 et ainsi de suite.

Ainsi, les points de couleur des pixels des points de vue de l'image autostéréoscopique sont vus dans 3 lentilles ou fentes successives du réseau RL, l'ordre des points de couleur changeant d'une ligne à l'autre, et redevenant le même toutes les trois lignes.

La figure 2 représente la permutation dans le cas où N = 8 (image autostéréoscopique à 8 points de vue). Dans ce cas, le réseau RL présente un pas égal à N = 8 fois le pas des points de couleur dans le sens des lignes.

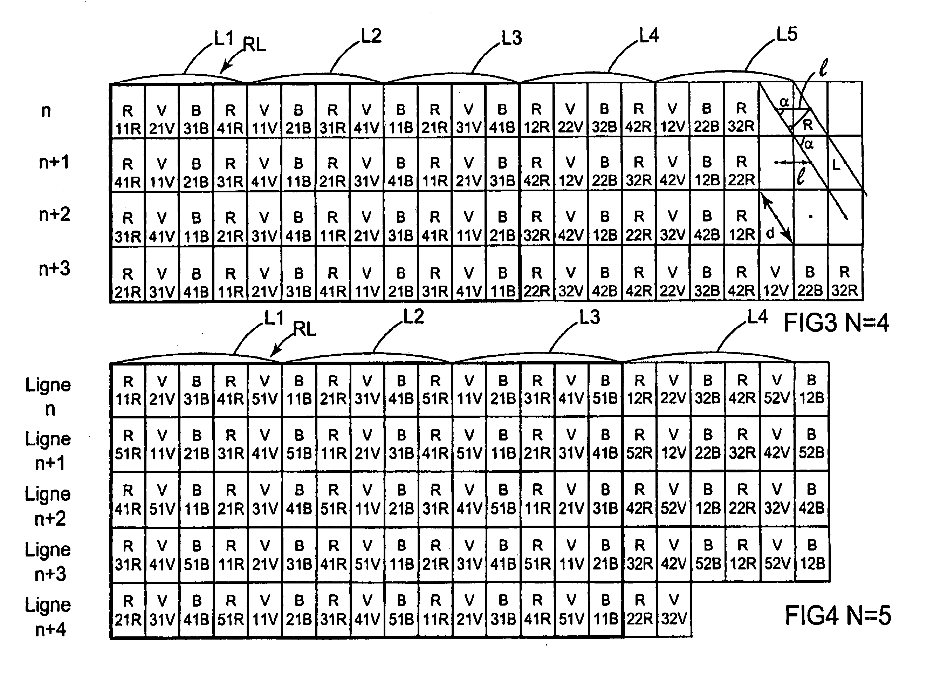

Les figures 3 et suivantes correspondent au cas d'un écran classique dont les lignes de pixels d'affichage sont identiques. Selon l'invention, on réalise un décalage de l'affichage sur N lignes successives (et non plus trois lignes successives comme précédemment), cette séquence se répétant ensuite verticalement pour les groupes de N lignes successives. En d'autres termes, les lignes n + N, (n + N + 1) ..... (n + 2N - 1) sont identiques respectivement aux lignes n, n + 1, .... (n + N - 1), et ainsi de suite. Le réseau RL (réseau lenticulaire ou réseau de parallaxe) est incliné de sorte que l'un de ses éléments sélecteurs (fente ou lenticule cylindrique) soit parallèle aux lignes reliant les centres des points de couleur, en tenant compte d'un décalage d'une ligne à l'autre qui est égal au pas d'un point de couleur. Le pas du réseau lenticulaire ou du reseau de parallaxe est modifié par cette inclinaison, selon la formule ci-après en liaison avec la figure 3. La valeur de l'angle d'inclinaison est indépendante du nombre de points de vue.

Soit *PR* le pas du réseau, I le pas des points de couleur dans le sens des lignes. L le pas des lignes, d la longueur de la diagonale d'un point de couleur , $\alpha$ l'angle d'inclinaison de l'axe du réseau par rapport à la direction des lignes de l'écran, et $\beta$ l'angle d'inclinaison de l'axe du réseau par rapport à la direction des colonnes de l'écran :

$$sin\alpha = \frac{PR}{N\ell} = \frac{L}{d} \qquad \text{et} \quad d^2 = L^2 + l^2/4$$

d'où

$$PR = \frac{N\ell L}{\sqrt{L^2 + \ell^2/4}}$$

$$sin\alpha \quad = \frac{L}{\sqrt{L^2 + \ell^2 / 4}} = \cos\beta$$

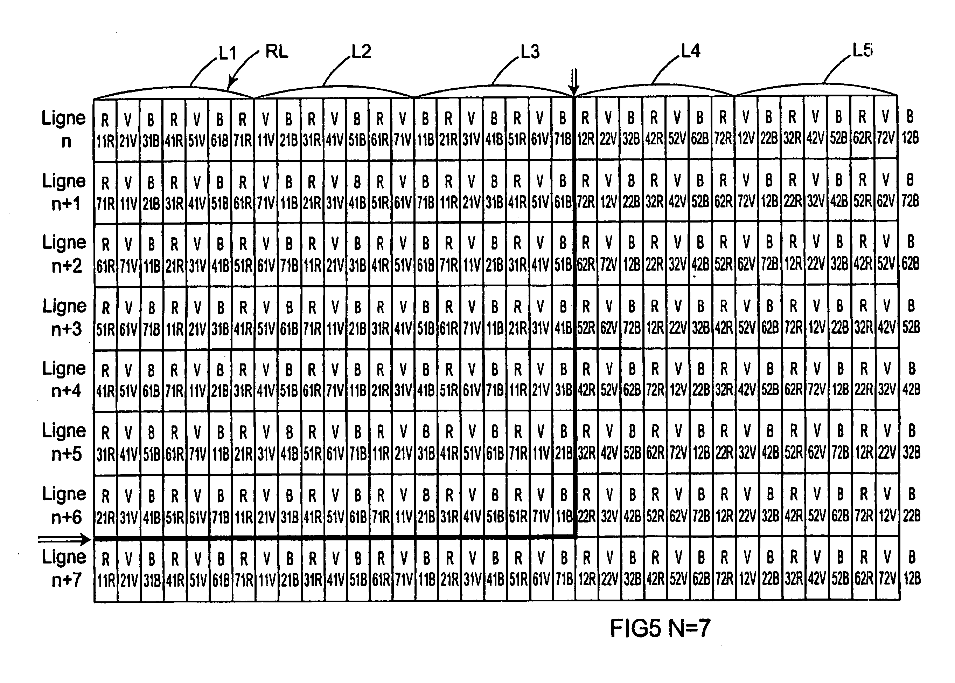

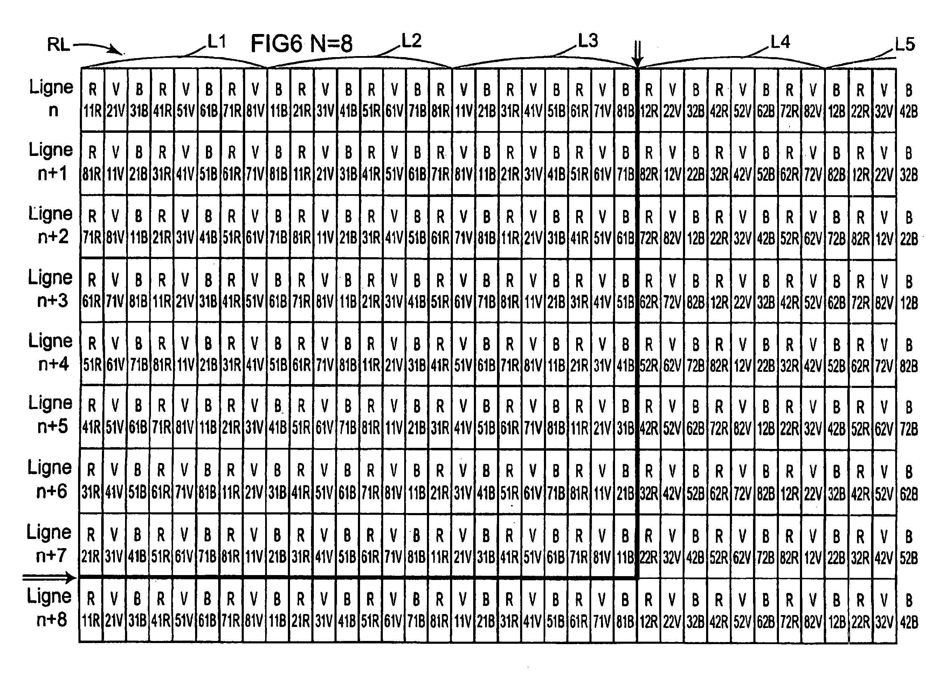

La figure 4 concerne les cas où N = 5, alors que les figures 5 et 6 sont relatives au cas où N = 7 et N = 8 respectivement.

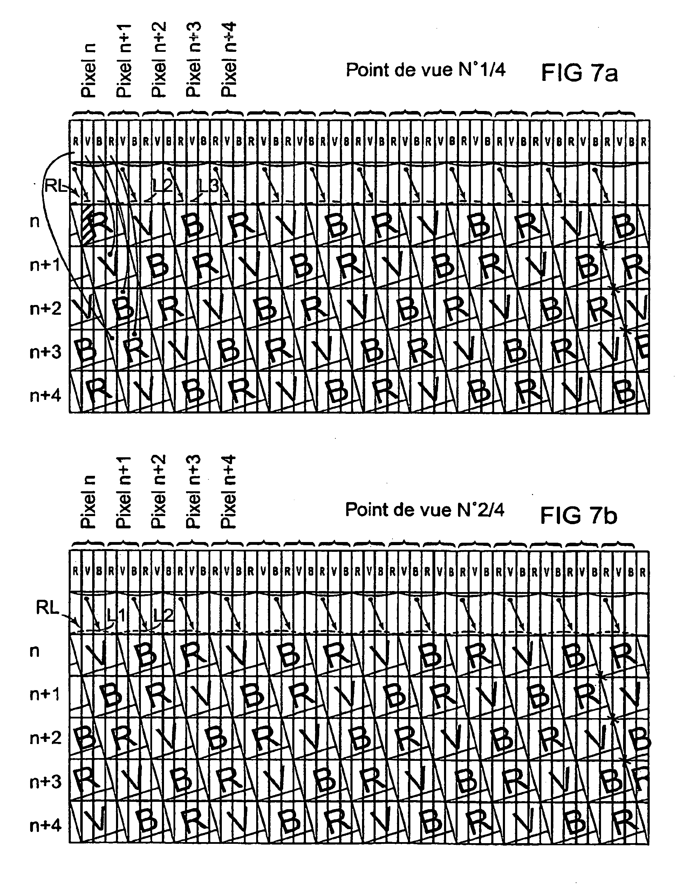

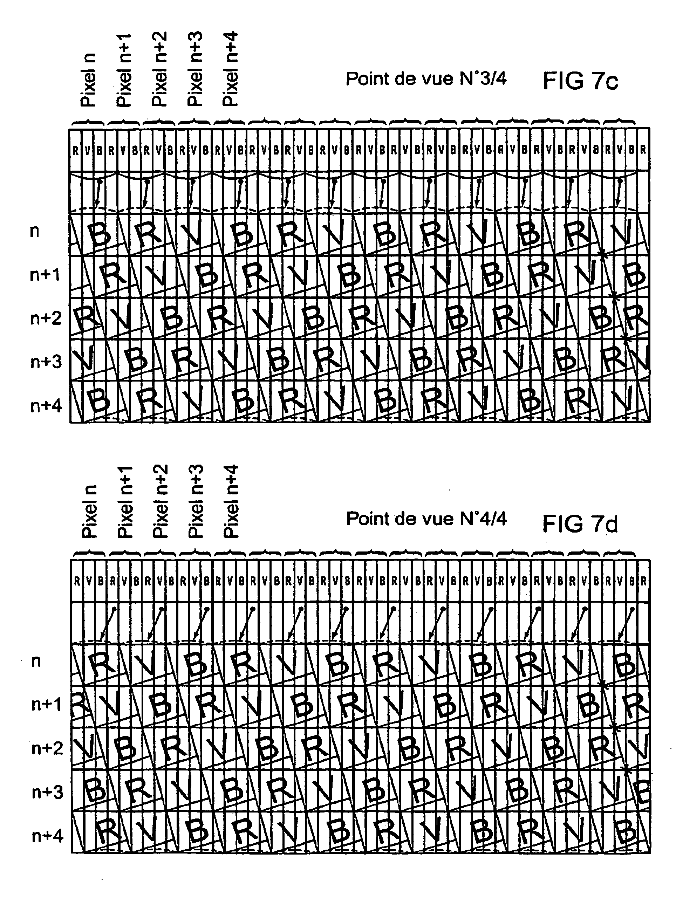

Les figures 7a à 7d explicitent la figure 3 pour chacun des quatre points de vue. A la position nominale d'observation, une vision autostéréoscopique pourra être obtenue par exemple par visualisation du point de vue n° 1 pour l'oeil gauche et du point de vue n° 3 pour l'oeil droit, ou bien par la visualisation du point de vue n° 2 pour l'oeil gauche et du point de vue n° 3 pour l'oeil droit, ou du point de vue n° 3 pour l'oeil gauche et du point de vue n° 4 pour l'oeil droit.

Du fait de l'inclinaison des lenticules d'un angle β rapport à la direction des colonnes de l'écran, pour produire un décalage dans la direction des lignes qui est égal au pas I des points de couleur, un lenticule qui grossit pour une ligne le point de couleur rouge R, grossit pour la ligne suivante de point de couleur adjacent vert V, et pour la ligne qui suit, le point de couleur bleue B, pour revenir au point de couleur rouge R à la ligne suivante, et ainsi de suite. Il en va de même avec la sélection par occultation produite par un réseau de parallaxe placé devant l'écran, ou entre celui-ci et un dispositif d'éclairage dans le cas d'un écran (écran à cristaux liquides).

Les pixels de même numéro des N points de vue autostéréoscopiques sont visualisés par 3 lentilles successives d'un réseau lenticulaire (ou trois fentes cylindriques d'un réseau de parallaxe), les trois points de couleur de chaque pixel occupant des positions homologues devant 3 fentes ou lentilles successives.

La permutation selon les première et deuxième variantes de l'invention a pour effet qu'aussi bien dans le sens des lignes que dans le sens des colonnes, les points de couleur adjacents d'un point de vue que voit l'oeil d'un spectateur ont une couleur différente, ce qui a pour effet de supprimer l'effet d'aplat ou de bandes de couleur verticales et dans le cas de l'inclinaison du réseau de minimiser les barres noires interpixel.

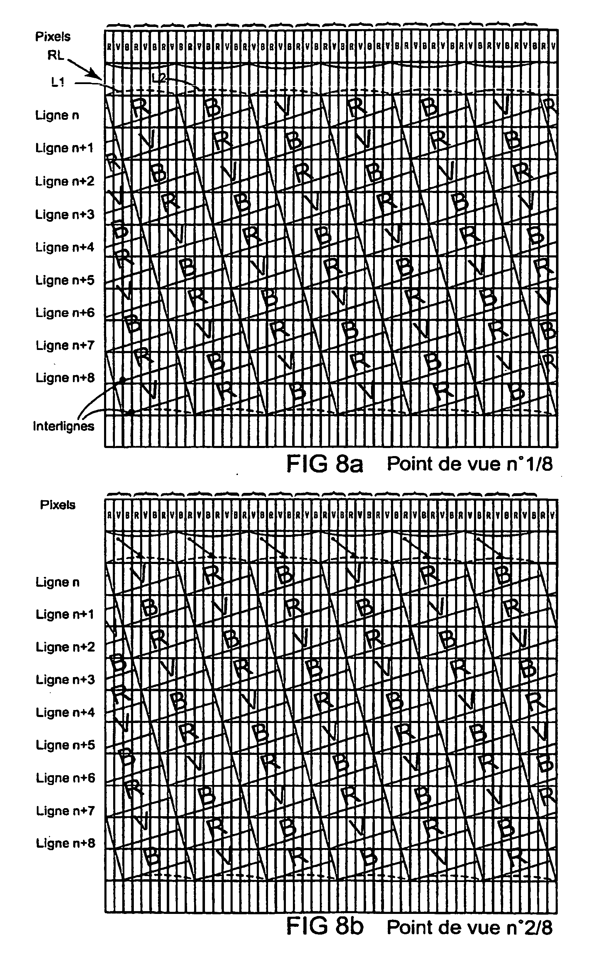

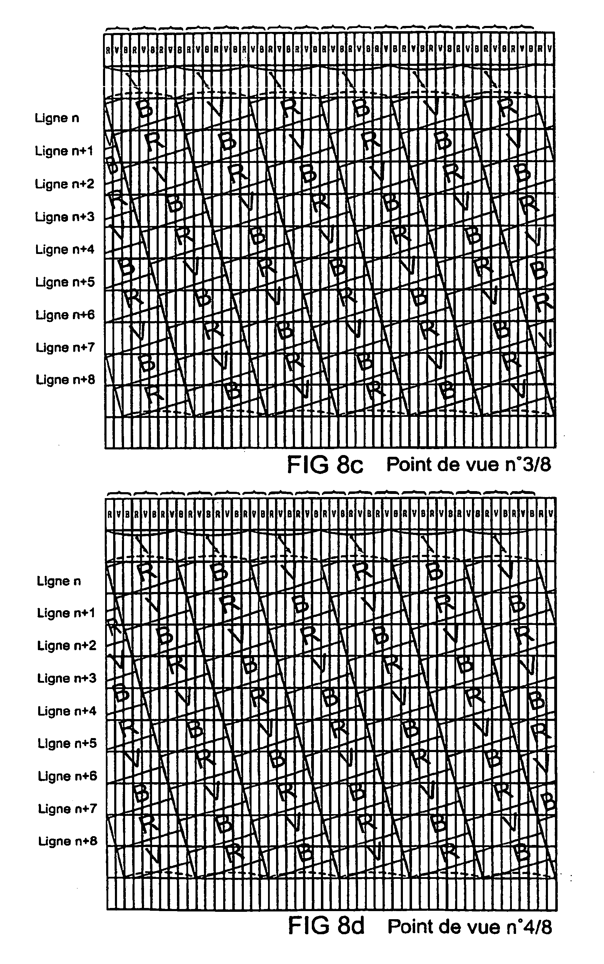

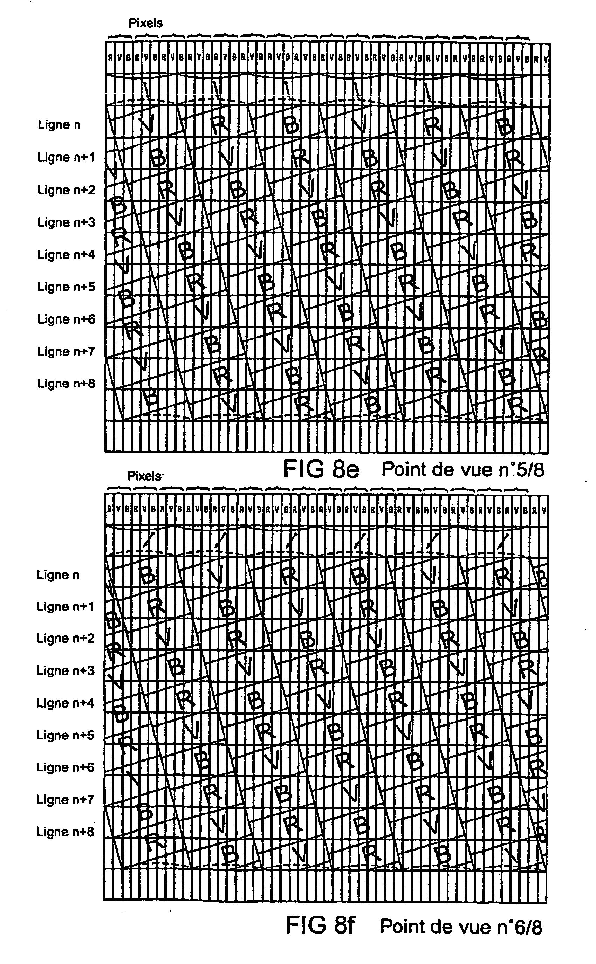

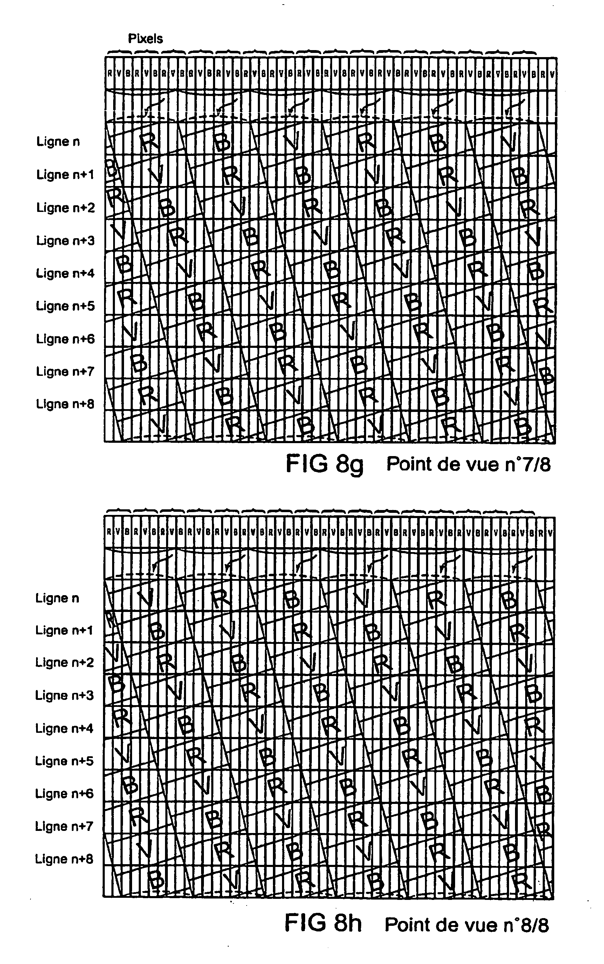

Les figures 8a à 8h explicitent le cas de la figure 6 pour chacun des huit points de vue.

Pour chaque groupe de N lignes, il existe ainsi d'une ligne à l'autre, un décalage d'un pas égal au pas des points de couleurs. Ce décalage s'opère avec permutation circulaire de sorte que le premier point de couleur du Nème pixel apparaisse au début de la deuxième ligne dudit groupe, le premier point de couleur du (N - 1)ème pixel apparaisse au début de la troisième ligne du groupe et ainsi de suite.

Comme le montrent les figures 3 à 8, le procédé selon ce deuxième mode de réalisation est caractérisé en ce que pour un groupe de N lignes comprenant une première, une deuxième, une troisième lignes, .....une Nème ligne, on a , $R_0(N/3)$ désignant le reste (1 ou 2) de la division de N par 3:

Pour la première ligne dudit groupe :

- un premier point de couleur (11R, 12R, 13R ....) des pixels de la première ligne d'un dit premier point de vue est affiché sur les points de couleur de rang 1 modulo 3N des pixels d'affichage de la première ligne, un deuxième point de couleur (11V, 12V, 13V ....) des pixels de la première ligne d'un dit premier point de vue est affiché sur les points de couleur de rang 1 + N modulo 3N des pixels d'affichage de la première ligne, et un troisième point de couleur (11B, 12B, 13B ....) des pixels de la première ligne dudit premier point de vue est affiché sur les points de couleur de rang 1 + 2N modulo 3N des pixels d'affichage de la première ligne.

- un deuxième point de couleur (21V, 22V, 23V ....) des pixels de la première ligne d'un dit deuxième point de vue est affiché sur les points de couleur de rang 2 modulo 3N des pixels d'affichage de la première ligne, un troisième point de couleur (21 B, 22B, 23B ....) des pixels de la première ligne dudit deuxième point de vue est affiché sur les points de couleur de rang 2 + N modulo 3N des pixels d'affichage de la première ligne, et un premier point de couleur (21 R, 22R, 23R ....) des pixels de la première ligne dudit deuxième point de vue est affiché sur les points de couleur de rang 2 + 2N modulo 3N des pixels d'affichage de la première ligne.

- un troisième point de couleur (31 B, 32B, 33B ....) des pixels de la première ligne d'un dit troisième point de vue est affiché sur les points de couleur de rang 3 modulo 3N des pixels d'affichage de la première ligne, un premier point de couleur (31R, 32R, 33R ....) des pixels de la première ligne dudit troisième point de vue est affiché sur les points de couleur de rang 3 + N modulo 3 N des pixels d'affichage de la première ligne, et un deuxième point de couleur (31V, 32V, 33V ....) des pixels de la première ligne dudit troisième point de vue est affiché sur les points de couleur de rang 3 + 2N modulo 3N des pixels d'affichage de la première ligne, etc...

- et un $R_0(N/3)$ème point de couleur des pixels de la première ligne du Nème point de vue est affiché sur les points de couleur de rang N modulo 3N des pixels d'affichage de la première ligne, un deuxième point de couleur (N1V, N2V....) pour $R_0(N/3)$ = 1 ou un premier point de couleur (N1R, N2R ...) pour $R_0(N/3)$ = 2 des pixels de la première ligne du Nème point de vue est affiché sur les points de couleur de rang 2N modulo 3N des pixels d'affichage de la première ligne, et le troisième point de couleur (N1B) des pixels de la première ligne du N^{ème} point de vue est affiché sur le point de couleur de rang 3N modulo 3N des pixels d'affichage de la première ligne.

Pour la deuxième ligne dudit groupe :

- un deuxième point de couleur des pixels de la deuxième ligne (11 R, 12R, 13R ....) d'un dit premier point de vue est affiché sur les points de couleur de rang 2 modulo 3N des pixels d'affichage de la deuxième ligne, un troisième point de couleur (11B, 12B, 13B ....) des pixels de la deuxième ligne dudit premier point de vue est affiché sur les points de couleur de rang 2 + N modulo 3 N des pixels d'affichage de la deuxième ligne, et un premier point de couleur (11R, 12R, 13R ....) des pixels de la deuxième ligne dudit premier point de vue est affiché sur les points de couleur de rang 2 + 2N modulo 3N des pixels d'affichage de la deuxième ligne.
- un troisième point de couleur (21B, 22B, 23B ....) des pixels de la deuxième ligne d'un dit deuxième point de vue est affiché sur les points de couleur de rang 3 modulo 3N des pixels d'affichage de la deuxième ligne, un premier point de couleur (21R, 22R, 23R ....) des pixels de la deuxième ligne dudit deuxième point de vue est affiché sur les points de couleur de rang 3 + N modulo 3 N des pixels d'affichage de la deuxième ligne, et un deuxième point de couleur (21V, 22V, 23V ....) des pixels de la deuxième ligne dudit deuxième point de vue est affiché sur les points de couleur de rang 3 + 2N modulo 3N des pixels d'affichage de la deuxième ligne.
- un premier point de couleur (31R, 32R, 33R ....) des pixels de la deuxième ligne d'un dit troisième point de vue est affiché sur les points de couleur de rang 4 modulo 3N des pixels d'affichage de la deuxième ligne, un deuxième point de couleur (31V, 32V, 33V ....) des pixels de la deuxième ligne dudit troisième point de vue est affiché sur les points de couleur de rang 4 + N modulo 3 N des pixels d'affichage de la deuxième ligne, et un troisième point de couleur (31 B, 32B, 33B ....) des pixels de la deuxième ligne dudit troisième point de vue est affiché sur les points de couleur de rang 4 + 2N modulo 3N des pixels d'affichage de la deuxième ligne, etc...
- et un premier point de couleur des pixels de la deuxième ligne du N^{ème} point de vue est affiché sur les points de couleur 1 modulo 3N des pixels d'affichage de la première ligne, le deuxième (pour $R_0(N/3) = 1$) ou le troisième (pour $R_0(N/3) = 2$), point de couleur des pixels de la deuxième ligne du Nème point de vue est affiché sur les points de couleur de rang N + 1 modulo 3N des pixels d'affichage de la deuxième ligne, et le troisième (pour $R_0(N/3) = 1$) ou le deuxième (pour $R_0(N/3) = 2$) point de couleur des pixels de la deuxième ligne du N^{ème} point de vue est affiché sur le point de couleur de rang 2N + 1 modulo 3N des pixels d'affichage de la deuxième ligne.

Pour la troisième ligne dudit groupe :

- un troisième point de couleur (11B, 12B, 13B ....) des pixels de la troisième ligne d'un dit premier point de vue est affiché sur les points de couleur de rang 3 modulo 3N des pixels d'affichage de la troisième ligne, un premier point de couleur (11R, 12R, 13R ....) des pixels de la troisième ligne d'un dit premier point de vue est affiché sur les points de couleur de rang 3 + N modulo 3 N des pixels d'affichage de la troisième ligne, et un deuxième point de couleur (11V, 12V, 13V ....) des pixels de la troisième ligne dudit premier point de vue est affiché sur les points de couleur de rang 1 + 2N modulo 3N des pixels d'affichage de la troisième ligne.
- un premier point de couleur (21 R, 22R, 23R ....) des pixels de la troisième ligne d'un dit deuxième point de vue est affiché sur les points de couleur de rang 4 modulo 3N des pixels d'affichage de la troisième ligne, un deuxième point de couleur des pixels de la troisième ligne dudit deuxième point de vue est affiché sur les points de couleur de rang 4 + N modulo 3 N des pixels d'affichage de la troisième ligne, et un premier point de couleur (21R. 22R, 23R ....) des pixels de la troisième ligne dudit deuxième point de vue est affiché sur les points de couleur de rang 4 + 2N modulo 3N des pixels d'affichage de la troisième ligne.
- un deuxième point de couleur (31V, 32V, 33V ....) des pixels de la troisième ligne d'un dit troisième point de vue est affiché sur les points de couleur de rang 5 modulo 3N des pixels d'affichage de la troisième ligne, un troisième point de couleur (31 B, 32B, 33B ....) des pixels de la troisième ligne dudit troisième point de vue est affiché sur les points de couleur de rang 5 + N modulo 3 N des pixels d'affichage de la troisième ligne, et un premier point de couleur (31 R, 32R, 33R ....) des pixels de la troisième ligne dudit troisième point de vue est affiché sur les points de couleur de rang 5 + 2N modulo 3N des pixels d'affichage de la troisième ligne, etc...
- et un deuxième point de couleur des pixels successifs du N^{ème} point de vue est affiché sur les points de couleur 2 modulo 3N des pixels d'affichage de la troisième ligne, un troisième (pour $R_0(N/3) = 1$) ou un premier (pour $R_0(N/3) = 2$) point de couleur des pixels de la troisième ligne du N^{ème} point de vue est affiché sur les points de couleur de rang N + 2 modulo 3N des pixels d'affichage de la troisième ligne, et un premier (pour $R_0(N/3) = 1$) ou un troisième (pour $R_0(N/3) = 2$) point de couleur des pixels de la troisième ligne du N^{ème} point de vue est affiché sur le point de couleur de rang 2N + 2 modulo 3N des pixels d'affichage de la troisième ligne,
  et ainsi de suite jusqu'à la N^{ème} ligne du groupe.

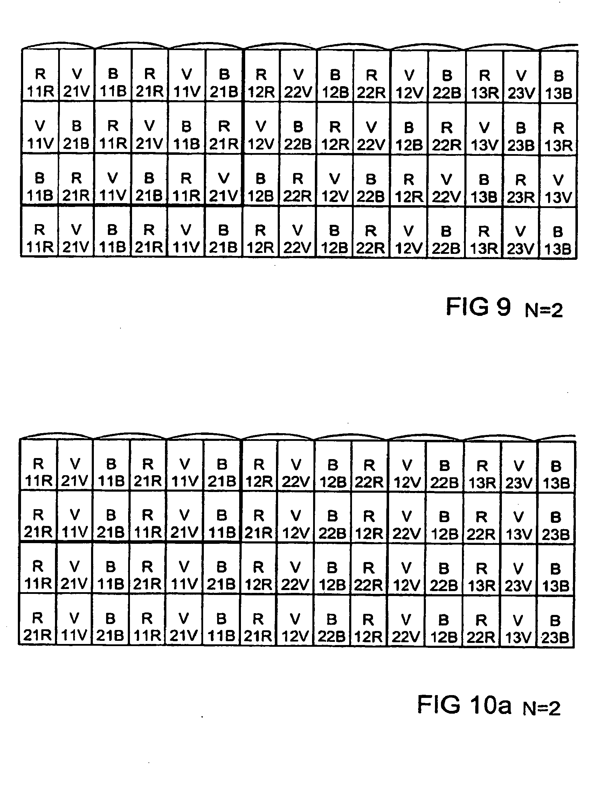

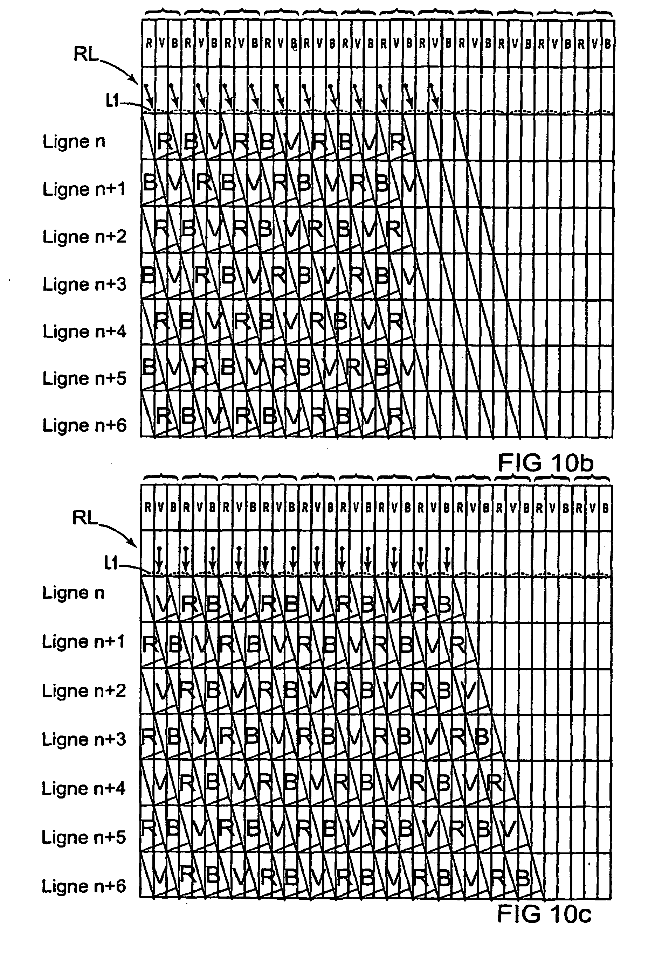

Les figures 9 et 10 à 10c illustrent le cas de N = 2 pour les première et deuxième variantes respectivement. Dans le cas de la première variante, il y a répétition par groupes de 3 lignes, alors que dans le cas de la deuxième variante, il y a répétition par groupes de N = 2 lignes.

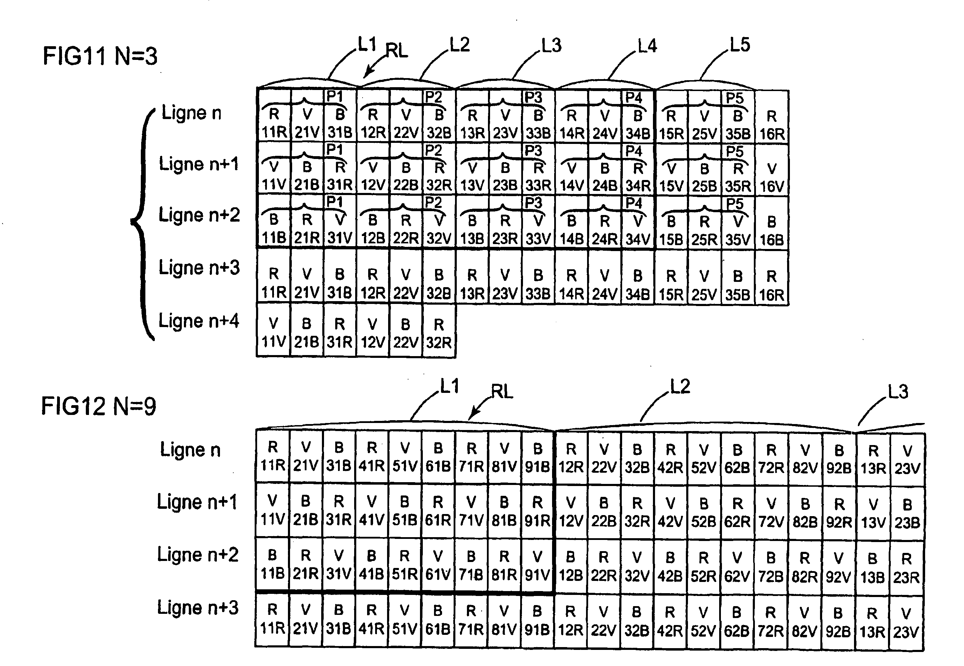

Les figures 11 à 13 concernent le cas où N est un multiple de trois. L'invention met à profit la permutation des points de couleur d'une ligne à l'autre pour n'afficher sur chaque ligne qu'une composante de couleur pour chaque point de vue, à savoir, pour la première ligne, le rouge R pour le premier point de vue (modulo 3), le vert V pour le deuxième point de vue (modulo 3) et le bleu B pour le troisième point de vue (modulo 3).

Dans le cas où la permutation des points de couleur d'une ligne à l'autre est réalisée par l'écran lui-même (figure 11 N = 3 ; figure 12 N = 9), les pixels de l'image autostéréoscopique sont affichés de la même façon d'une ligne à l'autre, sauf que le point de couleur varie d'une ligne à la suivante.

Le réseau lenticulaire étant placé parallèle aux colonnes de points de couleur, on reconstitue trois points de couleur à partir de trois pixels de même rang et de même point de vue sur trois lignes successives. Cette approximation n'est que peu pénalisante en pratique.

Pour éviter une perte de définition, on utilise de préférence la technique d'affichage décrite dans la Demande PCT WO 00/10332 précitée selon laquelle on ne retient qu'un point de couleur de chaque pixel d'une image autostéréoscopique de définition supérieure.

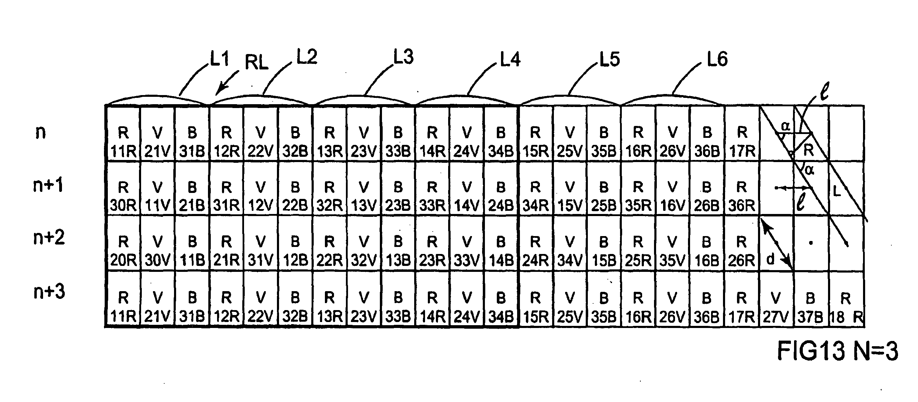

Dans le cas où l'écran présente des lignes de pixels identiques (figure 13, N = 3), le réseau lenticulaire de visualisation est incliné et les points de couleurs sont décalés d'un rang lorsqu'on passe d'une ligne à l'autre.

Comme dans le cas des première et deuxième variantes, on supprime l'effet d'aplat ou de bandes de couleur verticales et dans le cas de l'inclinaison du réseau, on minimise les barres noires interpixel.

Dans le cas des figures 11 et 13 (N = 3), pour la première ligne n, chaque pixel d'affichage provient de trois pixels de même rang de trois points de vue différents (par exemple, 13R, 23V, 33B).

Pour les deuxièmes (n+1) et troisième (n+2) lignes, chaque pixel d'affichage provient de deux pixels de même rang de deux points de vue différents et d'un pixel d'un autre rang d'un troisième point de vue (par exemple 23R, 33V, 14B sur la ligne n+2 de figures 11 et 13).

Dans le cas classique où le constructeur a placé les couleurs identiques les unes au-dessus des autres pour toutes les lignes, le sélecteur optique est donc orienté selon une diagonale passant par le centre des points de couleur, superposés et contigus, de couleurs différentes.

C'est afin d'améliorer la qualité et d'éviter l'effet cumulatif de répétition des couleurs des points visibles verticalement dans les colonnes que le sélecteur optique est placé légèrement oblique pour assurer une seconde permutation circulaire des points de couleurs selon le nouvel axe du sélecteur optique. Selon la constitution des écrans (organisation spatiale et la taille des pixels, taille et morphologie des espaces aveugles entre les points de couleurs), l'angle d'inclinaison du sélecteur optique est choisi le plus vertical possible (les yeux du spectateur étant le plus souvent alignés horizontalement) tout en permettant de créer dans les lignes suivantes des groupes de N points de couleurs commençant par l'une des couleurs des points de couleurs différentes de la ligne supérieure et ainsi de suite modulo P points de couleurs.

Si les points de couleurs des pixels de l'écran, bien qu'alignés selon des horizontales et des verticales, ne sont pas ordonnés identiquement dans les lignes qui se suivent alors le sélecteur optique peut rester strictement vertical.

Afin d'assurer un très grand pouvoir séparateur au sélecteur optique placé à une distance focale (ou équivalent - pour les barrières de parallaxe) de l'écran, il faut veiller à ce que les axes optiques du sélecteur soient alignés simultanément avec tous les pixels de couleurs modulo N horizontalement, ce qui oblige à redéfinir le pas du sélecteur optique pour une distance idéale d'observation choisie. Plus le sélecteur optique est oblique, plus son pas est réduit selon la direction perpendiculaire à son axe longitudinal. Le mode de calcul a été donné ci-dessus.

Lors de la création de l'image auto stéréoscopique à partir des N points de vue, on n'utilise que les pixels de couleurs de chacun des pixels de chacun des points de vue en correspondance avec ceux de l'écran, observables au travers du sélecteur optique selon les directions choisies pour percevoir chacun des points de vue. Lorsque l'on se déplace parallèlement au plan de l'écran à une distance différente de la distance idéale d'observation, le changement de points de vue se perçoit selon l'axe du sélecteur optique, en diagonale, sans aucune déformation des points de vue (les images restent droites et ne sont pas altérées).

Si le sélecteur optique est un réseau de micro lentilles, on choisit leur focale pour qu'à la distance idéale d'observation (distance de teinte plate), la distance horizontale qui sépare l'observation de deux points de vue différents et contigus, ne soit pas supérieure à la distance inter pupillaire moyen.

On pourrait envisager un décalage angulaire du réseau de sorte qu'il soit parallèle à la diagonale d'un groupe de deux points de couleur placés côte à côte le long d'une ligne. Une telle inclinaison n'est pas favorable. Elle assure en fait qu'une permutation d'un point de couleur d'une ligne à l'autre puisqu'il y a trois points de couleur. Il est donc plus avantageux de placer le réseau parallèle à l'autre diagonale des points de couleur individuels.

**Revendications**

1.  Procédé d'affichage d'une image autostéréoscopique à N points de vue, sur au moins une partie d'un écran comportant des pixels d'affichage disposés selon des lignes et des colonnes, chaque pixel d'affichage comprenant un premier, un deuxième et un troisième points de couleur alignés sur une même ligne et dont chacun est de couleur différente (R.V.B.), le premier pixel d'affichage d'une ligne étant constitué par les points de couleur de rang 1 à 3, le deuxième pixel d'affichage d'une ligne étant constitué par les points de couleur de rang 4 à 6, ... le pixel d'affichage de rang q d'une ligne étant constitué par les points de couleur de rang (3q - 2) à 3q, procédé dans lequel N est supérieur à 1 et dans lequel les pixels d'une image autostéréoscopique à afficher sont affichés de telle sorte que les 3 points de couleur de chaque pixel d'affichage affichent 3 points de couleur de composante de couleur homologue de pixels de l'image autostéréoscopique provenant d'au moins deux pixels de même rang d'au moins deux points de vue différents, **caractérisé en ce que**, pour au moins un groupe de deux lignes successives de l'image comprenant une première, une deuxième et une troisième ligne, ladite répartition spatiale des 3 points de couleur est décalée d'un pas correspondant à un point de couleur lorsqu'on passe d'une ligne du groupe à une ligne adjacente.

2.  Procédé selon la revendication 1, **caractérisé en ce que** N n'est pas un multiple de 3 et **en ce que** les pixels d'une l'image autostéréoscopique à afficher sont affichés en répartissant spatialement les trois points de couleur de chaque pixel de l'image autostéréoscopique entre les trois points de couleur de composante de couleur homologue d'au moins deux pixels d'affichage différents.

3.  Procédé selon la revendication 2, **caractérisé en ce que** N = 2 et **en ce que** :

    - la première ligne d'un groupe de trois lignes de l'écran affiche successivement le premier point de couleur (11 R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (11B) du premier pixel de la première ligne du premier point de vue de l'image autostéréoscopique, est ainsi de suite jusqu'au troisième point de couleur (2pB) du p$^{ème}$ pixel de la première ligne du deuxième point de vue de l'image autostéréoscopique.
    - la deuxième ligne d'un groupe de trois lignes de l'écran affiche successivement le deuxième point de couleur du premier pixel (11V) de la deuxième ligne du premier point de vue de l'image autostéréoscopique, le troisième point de couleur du premier pixel (21 B) de la deuxième ligne du deuxième point de vue de l'image autostéréoscopique, le premier point de couleur (11 R) du premier pixel de la deuxième ligne du premier point de vue de l'image autostéréoscopique, et ainsi de suite jusqu'au premier point de couleur (2pR) du p$^{ème}$ pixel de la deuxième ligne du deuxième point de vue de l'image autostéréoscopique.
    - la troisième ligne d'un groupe de trois lignes de l'écran affiche successivement le troisième point de couleur (11B) du premier pixel de la troisième ligne du premier point de vue de l'image autostéréoscopique, le premier point de couleur (21 R) du premier pixel de la troisième ligne du deuxième point de vue de l'image autostéréoscopique, le deuxième point de couleur (11V) du premier pixel de la troisième ligne du premier point de vue de l'image autostéréoscopique, et ainsi de suite jusqu'au deuxième point de couleur (2pV) du p$^{ème}$ pixel de la troisième ligne du deuxième point de vue de l'image autostéréoscopique.

4.  Procédé selon la revendication 2, **caractérisé en ce que** N > 3 et **en ce que** :

    - la première ligne d'un groupe de trois lignes de l'écran affiche successivement le premier point de couleur (11R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (31 B) du premier pixel de la première ligne du troisième point de vue de l'image autostéréoscopique, et ainsi de suite jusqu'au troisième point de couleur (N1B) du premier pixel de la première ligne du N$^{ème}$ point de vue, cette séquence se répétant ensuite pour les pixels suivants de la première ligne de l'image autostéréoscopique, à savoir pour le premier point de couleur (12R) du deuxième pixel de la première ligne du premier point de vue de l'image autostéréoscopique, pour le deuxième point de couleur (22V) du deuxième pixel de la première ligne du deuxième point de vue de l'image autostéréoscopique, ... pour le troisième point de couleur (N2B) du deuxième pixel de la première ligne du N$^{ème}$ point de vue, jusqu'au dernier point de couleur qui est le troisième point de couleur (NqB) du q$^{ème}$ pixel de la première ligne du N$^{ème}$ point de vue.
    - la deuxième ligne d'un dit groupe de trois lignes affiche successivement le deuxième point de couleur (11V) du premier pixel de la deuxième ligne du premier point de vue de l'image autostéréoscopique, le troisième point de couleur (21 B) du premier pixel de la deuxième ligne du deuxième point de vue de l'image autostéréoscopique, le premier point de couleur (31R) du premier pixel de la deuxième ligne du troisième point de vue et ainsi de suite jusqu'au premier point de couleur (N1R) du premier pixel de la deuxième ligne du N$^{ème}$ point de vue, cette séquence se répétant ensuite pour les pixels suivants de chacun des points de vue de l'image autostéréoscopique, à savoir avec le deuxième point de couleur (12V) du deuxième pixel de la deuxième ligne du premier point de vue de l'image autostéréoscopique, pour le troisième point de couleur (22B) du deuxième pixel de la deuxième ligne du deuxième point de vue l'image autostéréoscopique, pour le premier point de couleur (32R) du deuxième pixel de la deuxième ligne du troisième point de vue de l'image autostéréoscopie, .... pour le premier point de couleur (N2R) du deuxième pixel de la deuxième ligne du N$^{ème}$ point de vue, jusqu'au dernier point couleur qui est le premier point de couleur (NqR) du q$^{ème}$ pixel de la deuxième ligne du N$^{ème}$ point de vue.
- et la troisième ligne d'un dit groupe de trois lignes affiche successivement le troisième point de couleur (11 B) du premier pixel de la troisième ligne du premier point de vue, le premier point de couleur (21 R) du premier pixel de la troisième ligne du deuxième point de vue, le deuxième point de couleur (31 V) du premier pixel de la troisième ligne du troisième point de vue et ainsi de suite jusqu'au deuxième point de couleur (N1V) du premier pixel de la troisième ligne du N$^{ème}$ point de vue, cette séquence se répétant ensuite pour les pixels suivants de la troisième ligne de chacun des points de vue, à savoir avec le troisième point de couleur (12B) du deuxième pixel de la troisième ligne du premier point de vue, le premier point de couleur (22R) du deuxième pixel de la troisième ligne du deuxième point de vue, le deuxième point de couleur (32V) du deuxième pixel de la troisième ligne du troisième point de vue, ..., pour le deuxième point de couleur (N2V) du deuxième pixel de la troisième ligne du N$^{ème}$ point de vue, jusqu'au dernier point de couleur qui est le deuxième point de couleur (NqV) du q$^{ème}$ pixel de la troisième ligne du N$^{ème}$ point de vue.

5.  Procédé selon une des revendications 3 ou 4, **caractérisé en ce que** l'écran présente au moins un groupe de trois lignes dont les pixels présentent trois points de couleur disposés sur trois colonnes successives de points de couleur, les points de couleur étant permutés d'une ligne à l'autre, la première ligne comportant des pixels d'affichage dont chacun est composé successivement d'un premier point de couleur, d'un deuxième point de couleur et d'un troisième point de couleur, la deuxième ligne comportant des pixels d'affichage dont chacun est composé successivement d'un deuxième point de couleur, d'un troisième point de couleur et d'un premier point de couleur, et la troisième ligne comportant des pixels d'affichage dont chacun est composé successivement d'un troisième point de couleur, d'un premier point de couleur et d'un deuxième point de couleur.

6.  Procédé selon la revendication 5, **caractérisé en ce qu'**il met en oeuvre, pour la visualisation de l'image autostéréoscopique, un réseau de sélection angulaire, tel qu'un réseau lenticulaire ou un réseau de parallaxe, ayant un axe parallèle aux dites colonnes de points de couleur.

7.  Procédé selon la revendication 2, **caractérisé en ce que** N = 2 est **en ce que** pour un groupe de 2 lignes comprenant une première et une deuxième lignes, on a :

    - la première ligne d'un groupe de deux lignes de l'écran affiche successivement le premier point de couleur (11 R) du premier pixel de la première ligne du premier point de vue de l'image autostéréoscopique, le deuxième point de couleur (21V) du premier pixel de la première ligne du deuxième point de vue de l'image autostéréoscopique, le troisième point de couleur (11B) du premier pixel de la première ligne du premier point de vue de l'image autostéréoscopique, et ainsi de suite jusqu'au troisième point de couleur (2pB) du p$^{ème}$ pixel de la première ligne du deuxième point de vue de l'image autostéréoscopique.
    - la deuxième ligne d'un groupe de deux lignes de l'écran affiche successivement le premier point de couleur du premier pixel (21 R) de la deuxième ligne du deuxième point de vue de l'image autostéréoscopique, le deuxième point de couleur du premier pixel (11V) de la deuxième ligne du premier point de vue de l'image autostéréoscopique, le troisième point de couleur (21B) du premier pixel de la deuxième ligne du deuxième point de vue de l'image autostéréoscopique, et ainsi de suite jusqu'au troisième point de couleur (1pB) du p$^{ème}$ pixel de la deuxième ligne du premier point de vue de l'image autostéréoscopique.

8.  Procédé selon la revendication 2, **caractérisé en ce que** N > 3 et pour un groupe de N lignes comprenant une première, une deuxième, une troisième lignes, .....et une N$^{ème}$ ligne on a :
    Pour la première ligne dudit groupe :

    - un premier point de couleur (11 R, 12R, 13R ....) des pixels de la première ligne d'un dit premier point de vue est affiché sur les points de couleur de rang 1 modulo 3N des pixels d'affichage de la première ligne, un deuxième point de couleur (11 V, 12V, 13V ....) des pixels de la première ligne d'un dit premier point de vue est affiché sur les points de couleur de rang 1 + N modulo 3N des pixels d'affichage de la première ligne, et un troisième point de couleur (11B, 12B, 13B ....) des pixels de la première ligne dudit premier point de vue est affiché sur les points de couleur de rang 1 + 2N modulo 3N des pixels d'affichage de la première ligne.

- un deuxième point de couleur (21V, 22V, 23V ....) des pixels de la première ligne d'un dit deuxième point de vue est affiché sur les points de couleur de rang 2 modulo 3N des pixels d'affichage de la première ligne, un troisième point de couleur (21 B, 22B, 23B ....) des pixels de la première ligne dudit deuxième point de vue est affiché sur les points de couleur de rang 2 + N modulo 3N des pixels d'affichage de la première ligne, et un premier point de couleur (21 R, 22R, 23R ....) des pixels de la première ligne dudit deuxième point de vue est affiché sur les points de couleur de rang 2 + 2N modulo 3N des pixels d'affichage de la première ligne.

- un troisième point de couleur des pixels (31 B, 32B, 33B ....) de la première ligne d'un dit troisième point de vue est affiché sur les points de couleur de rang 3 modulo 3N des pixels d'affichage de la première ligne, un premier point de couleur (31 R, 32R, 33R ....) des pixels de la première ligne dudit troisième point de vue est affiché sur les points de couleur de rang 3 + N modulo 3 N des pixels d'affichage de la première ligne, et un deuxième point de couleur (31V, 32V, 33V ....) des pixels de la première ligne dudit troisième point de vue est affiché sur les points de couleur de rang 3 + 2N modulo 3N des pixels d'affichage de la première ligne, etc...

- et un $R_0(N/3)^{\text{ème}}$ point de couleur des pixels de la première ligne du $N^{\text{ème}}$ point de vue est affiché sur les points de couleur de rang N modulo 3N des pixels d'affichage de la première ligne, un deuxième point de couleur (N1V, N2V, ...) pour $R_0(N/3) = 1$ ou un premier point de couleur (N1R, N2R ...) pour $R_0(N/3) = 2$ des pixels de la première ligne de $N^{\text{ème}}$ point de vue est affiché sur les points de couleur de rang 2N modulo 3N des pixels d'affichage de la première ligne, et le troisième point de couleur (N1B) des pixels de la première ligne du $N^{\text{ème}}$ point de vue est affiché sur le point de couleur de rang 3N modulo 3N des pixels d'affichage de la première ligne.

Pour la deuxième ligne dudit groupe :

- un deuxième point de couleur des pixels (11V, 12V, 13V ....) de la deuxième ligne d'un dit premier point de vue est affiché sur les points de couleur de rang 2 modulo 3N des pixels d'affichage de la deuxième ligne, un troisième point de couleur (11B, 12B, 13B .., des pixels de !a deuxième ligne dudit premier point de vue est affiché sur les points de couleur de rang 2 + N modulo 3 N des pixels d'affichage de la deuxième ligne, et un premier point de couleur (11 R, 12R, 13R ....) des pixels de la deuxième ligne dudit premier point de vue est affiché sur les points de couleur de rang 2 + 2N modulo 3N des pixels d'affichage de la deuxième ligne.

- un troisième point de couleur (21 B, 22B, 23B ....) des pixels de la deuxième ligne d'un dit deuxième point de vue est affiché sur les points de couleur de rang 3 modulo 3N des pixels d'affichage de la deuxième ligne, un premier point de couleur (21 R, 22R, 23R ....) des pixels de la deuxième ligne dudit deuxième point de vue est affiché sur les points de couleur de rang 3 + N modulo 3 N des pixels d'affichage de la deuxième ligne, et un deuxième point de couleur (21V, 22V, 23V ....) des pixels de la deuxième ligne dudit deuxième point de vue est affiché sur les points de couleur de rang 3 + 2N modulo 3N des pixels d'affichage de la deuxième ligne.

- un premier point de couleur (31 R, 32R, 33R ....) des pixels de la deuxième ligne d'un dit troisième point de vue est affiché sur les points de couleur de rang 4 modulo 3N des pixels d'affichage de la deuxième ligne, un deuxième point de couleur (31V, 32V, 33V ....) des pixels de la deuxième ligne dudit troisième point de vue est affiché sur les points de couleur de rang 4 + N modulo 3 N des pixels d'affichage de la deuxième ligne, et un troisième point de couleur (31 B, 32B, 33B ....) des pixels de la deuxième ligne dudit troisième point de vue est affiché sur les points de couleur de rang 4 + 2N modulo 3N des pixels d'affichage de la deuxième ligne, etc...

- et un premier point de couleur des pixels de la deuxième ligne du $N^{\text{ème}}$ point de vue est affiché sur les points de couleur 1 modulo 3N des pixels d'affichage de la deuxième ligne, le deuxième (pour $R_0(N/3) = 1$) ou le troisième (pour $R_0(N/3) = 2$) point de couleur pour les pixels de la deuxième ligne de Nème point de vue est affiché sur les points de couleur de rang N + 1 modulo 3N des pixels d'affichage de la deuxième ligne, et le troisième (pour $R_0(N/3) = 1$) ou le deuxième (pour $R_0(N/3) = 2$) point de couleur des pixels de la deuxième ligne du $N^{\text{ème}}$ point de vue est affiché sur les points de couleur de rang 2N + 1 modulo 2N des pixels d'affichage de la deuxième ligne.

Pour la troisième ligne dudit groupe :

- un troisième point de couleur (11 B, 12B, 13B ....) des pixels de la troisième ligne d'un dit premier point de vue est affiché sur les points de couleur de rang 3 modulo 3N des pixels d'affichage de la troisième ligne, un premier point de couleur (11 R, 12R, 13R ....) des pixels de la troisième ligne d'un dit premier point de vue est affiché sur les points de couleur de rang 3 + N modulo 3 N des pixels d'affichage de la troisième ligne, et un deuxième point de couleur (11V, 12V, 13V ....) des pixels de la troisième ligne dudit premier point de vue est affiché sur les points de couleur de rang 1 + 2N modulo 3N des pixels d'affichage de la troisième ligne.

- un premier point de couleur (21 R, 22R, 23R ....) des pixels de la troisième ligne d'un dit deuxième point de vue est affiché sur les points de couleur de rang 4 modulo 3N des pixels d'affichage de la troisième ligne, un deuxième point de couleur (21V, 22V, 23V, ...) des pixels de la troisième ligne dudit deuxième point de vue est affiché sur les points de couleur de rang 4 + N modulo 3 N des pixels d'affichage de la troisième ligne, et un premier point de couleur (21R, 22R, 23R ....) des pixels de la troisième ligne dudit deuxième point de vue est affiché sur les points de couleur de rang 4 + 2N modulo 3N des pixels d'affichage de la troisième ligne.

- un deuxième point de couleur (31V, 32V, 33V ....) des pixels de la troisième ligne d'un dit troisième point de vue est affiché sur les points de couleur de rang 5 modulo 3N des pixels d'affichage de la troisième ligne, un troisième point de couleur (31 B, 32B, 33B ....) des pixels de la troisième ligne dudit troisième point de vue est affiché sur les points de couleur de rang 5 + N modulo 3 N des pixels d'affichage de la troisième ligne, et un premier point de couleur (31R, 32R, 33R ....) des pixels de la troisième ligne dudit troisième point de vue est affiché sur les points de couleur de rang 5 + 2N modulo 3N des pixels d'affichage de la troisième ligne, etc...
- et un deuxième point de couleur des pixels de la troisième ligne du N$^{ème}$ point de vue est affiché sur les points de couleur 2 modulo 3N des pixels d'affichage de la troisième ligne, un troisième (pour $R_0(N/3)$ = 1) ou un premier (pour $R_0(N/3)$ = 2) point de couleur des pixels de la troisième ligne du N$^{ème}$ point de vue est affiché sur les points de couleur de rang N + 2 modulo 3N des pixels d'affichage de la troisième ligne, et un premier (pour $R_0(N/3)$ = 1) ou un troisième (pour $R_0(N/3)$ = 2) point de couleur des pixels de la troisième ligne du N$^{ème}$ point de vue est affiché sur le point de couleur de rang 2N + 2 modulo 3N des pixels d'affichage de la troisième ligne,
et ainsi de suite par permutation circulaire jusqu'à la N$^{ème}$ linge.

9. Procédé selon une des revendications 7 ou 8, **caractérisé en ce qu'**il met en oeuvre, pour afficher lesdits images autostéréoscopiques, un écran équipé d'un réseau de sélection angulaire dont les axes principaux sont parallèles à une diagonale des points de couleur et dont le pas PR permet de couvrir N points de couleur.

10. Procédé selon la revendication 1, **caractérisé en ce que** N est un multiple de 3 et **en ce que** seul un point de couleur de chaque pixel de l'image autostéréoscopique à afficher est utilisé et **en ce qu'**une première ligne de l'écran affiche successivement le premier point de couleur (11R) du premier pixel de la première ligne du premier point de vue de l'image autostéréoscopique, le deuxième point de couleur (21V) du premier pixel de la première ligne du deuxième point de vue de l'image autostéréoscopique, et ainsi de suite jusqu'au troisième point de couleur (N1B) du premier pixel de la première ligne du N$^{ème}$ point de vue de l'image autostéréoscopique, la séquence se répétant ensuite pour le deuxième pixel de chaque point de vue de la première ligne de l'image autostéréoscopique et les suivants.

11. Procédé selon la revendication 10, **caractérisé en ce que** la deuxième ligne d'écran affiche successivement le deuxième point de couleur (11V) du premier pixel de la deuxième ligne du premier point de vue de l'image autostéréoscopique, le troisième point de couleur (21 B) du premier pixel de la deuxième ligne du deuxième point de vue de l'image autostéréoscopique, et ainsi de suite jusqu'au premier point de couleur (N1R) du premier pixel de la deuxième ligne du N$^{ème}$ point de vue de l'image autostéréoscopique, la séquence se répétant ensuite pour le deuxième pixel de chaque point de vue de la deuxième ligne de l'image autostéréoscopique et les suivants, et **en ce que** la troisième ligne de l'écran affiche successivement le troisième point de couleur (11B) du premier pixel de la troisième ligne du premier point de vue de l'image autostéréoscopique, le premier point de couleur (21 R) du premier pixel de la deuxième ligne du deuxième point de vue de l'image autostéréoscopique, et ainsi de suite jusqu'au deuxième point de couleur (N1V) du premier pixel de la deuxième ligne du N$^{ème}$ point de vue de l'image autostéréoscopique, la séquence se répétant ensuite pour le deuxième pixel de chaque point de vue de la troisième ligne de l'image autostéréoscopique et les suivants, et se répétant également pour les groupes de trois lignes de l'écran qui suivent le groupe constitué par lesdites première, deuxième et troisième lignes de l'écran.

12. Procédé selon la revendication 11, **caractérisé en ce que** l'écran présente au moins un groupe de trois lignes dont les pixels présentent trois points de couleur disposés sur trois colonnes successives de points de couleur, les points de couleur étant permutés d'une ligne à l'autre, la première ligne comportant des pixels d'affichage dont chacun est composé successivement d'un premier point de couleur, d'un deuxième point de couleur et d'un troisième point de couleur, la deuxième ligne comportant des pixels d'affichage dont chacun est composé successivement d'un deuxième point de couleur, d'un troisième point de couleur et d'un premier point de couleur, et la troisième ligne comportant des pixels d'affichage dont chacun est composé successivement d'un troisième point de couleur, d'un premier point de couleur et d'un deuxième point de couleur.

13. Procédé selon la revendication 12, **caractérisé en ce qu'**il met en oeuvre, pour la visualisation de l'image autostéréoscopique sur un écran, un réseau de sélection angulaire, tel qu'un réseau lenticulaire ou un réseau de parallaxe, ayant un axe parallèle aux dites colonnes de points de couleur.

14. Procédé selon la revendication 10, **caractérisé en ce que** la deuxième ligne de l'écran affiche successivement à partir de la deuxième position, le deuxième point de couleur (11 V) du premier pixel de la deuxième ligne du premier point de vue de l'image autostéréoscopique, le troisième point de couleur (21 B) du premier pixel de la deuxième ligne du deuxième point de vue de l'image autostéréoscopique, et ainsi de suite jusqu'au premier point de couleur (N1R) du premier pixel de la deuxième ligne du N^ème point de vue de l'image autostéréoscopique, la séquence se répétant ensuite pour le deuxième pixel de chaque point de vue de la deuxième ligne de l'image autostéréoscopique puis les suivants, et **en ce que** la troisième ligne de l'écran affiche successivement en troisième position le troisième point de couleur (11 B) du premier pixel de la troisième ligne du premier point de vue l'image autostéréoscopique, le premier point de couleur (21 R) du premier pixel du troisième ligne du deuxième point de vue de l'image autostéréoscopie, et ainsi de suite jusqu'au deuxième point de couleur (N1V) du premier pixel de la troisième ligne du N^ème point de vue de l'image autostéréoscopique, la séquence se répétant ensuite pour le deuxième pixel de chaque point de vue de la troisième ligne de l'image autostéréoscopique, puis les suivants.

15. Procédé selon la revendication 14, **caractérisé en ce qu'**il met en oeuvre, pour afficher lesdites images autostéréoscopiques, un écran équipé d'un réseau de sélection angulaire dont les axes sont parallèles à une diagonale des points de couleur et dont le pas PR permet de couvrir N points de couleur.

16. Procédé selon une des revendications précédentes, **caractérisé en ce que** p = q'/N, p désignant le nombre de pixels d'un point de vue et q' désignant le nombre des pixels d'affichage des lignes de l'écran.

17. Procédé selon une des revendications 1 à 15, **caractérisé en ce que** p < q'/N.

**Claims**

1. A method for displaying an autostereoscopic image having N viewpoints over at least a part of a screen comprising display pixels arranged in rows and columns, each display pixel comprising first, second, and third color dots aligned along the same row and each of which is of different color (R, G, B), the first display pixel of a row being formed by the color dots of rank 1 to 3, the second display pixel of a row being formed by the color dots of rank 4 to 6, ... the display pixel of rank q of a row being formed by the color dots of rank (3q - 2) to 3q, in which method N is greater than 1 and in which the pixels of an autostereoscopic image to be displayed are displayed in such a manner that the 3 color dots of each display pixel display 3 color dots of homologous color component of pixels of the autostereoscopic image coming from at least two pixels of same rank from at least two different viewpoints, **characterized in that**, for at least one group of two successive rows of the image comprising a first, a second and a third row, said spatial distribution of the 3 color dots is displaced by at least one step corresponding to one color dot when going from one row of the group to an adjacent row.

2. The method as claimed in claim 1, **characterized in that** N is not a multiple of 3 and **in that** the pixels of an autostereoscopic image to be displayed are displayed by spatially distributing the three color dots of each pixel of the autostereoscopic image between the three color dots of homologous color component of at least two different display pixels.

3. The method as claimed in claim 2, **characterized in that** N = 2 and **in that**:

    - the first row of a group of three rows of the screen successively displays the first color dot (11R) of the first pixel of the first row of the first viewpoint of the autostereoscopic image, the second color dot (21V) of the first pixel of the first row of the second viewpoint of the autostereoscopic image, the third color dot (11B) of the first pixel of the first row of the first viewpoint of the autostereoscopic image, and so on up to the third color dot (2pB) of the p^th pixel of the first row of the second viewpoint of the autostereoscopic image;
    - the second row of a group of three rows of the screen successively displays the second color dot of the first pixel (11V) of the second row of the first viewpoint of the autostereoscopic image, the third color dot of the first pixel (21B) of the second row of the second viewpoint of the autostereoscopic image, the first color dot (11R) of the first pixel of the second row of the first viewpoint of the autostereoscopic image, and so on up to the first color dot (2pR) of the p^th pixel of the second row of the second viewpoint of the autostereoscopic image;
    - the third row of a group of three rows of the screen successively displays the third color dot (11B) of the first pixel of the third row of the first viewpoint of the autostereoscopic image, the first color dot (21R) of the first pixel of the third row of the second viewpoint of the autostereoscopic image, the second color dot (11V) of the first pixel of the third row of the first viewpoint of the autostereoscopic image, and so on up to the second color dot (2pG) of the p^th pixel of the third row of the second viewpoint of the autostereoscopic image.

4. The method as claimed in claim 2, **characterized in that** N > 3 and **in that**:

- the first row of a group of three rows of the screen successively displays the first color dot (11R) of the first pixel of the first row of the first viewpoint of the autostereoscopic image, the second color dot (21G) of the first pixel of the first row of the second viewpoint of the autostereoscopic image, the third color dot (31B) of the first pixel of the first row of the third viewpoint of the autostereoscopic image, and so on up to the third color dot (N1B) of the first pixel of the first row of the $N^{th}$ viewpoint, this sequence subsequently being repeated for the following pixels of the first row of the autostereoscopic image, namely for the first color dot (12R) of the second pixel of the first row of the first viewpoint of the autostereoscopic image, for the second color dot (22V) of the second pixel of the first row of the second viewpoint of the autostereoscopic image, ... for the third color dot (N2B) of the second pixel of the first row of the $N^{th}$ viewpoint, up to the last color dot which is the third color dot (NqB) of the $q^{th}$ pixel of the first row of the $N^{th}$ viewpoint;

- the second row of a said group of three rows successively displays the second color dot (11V) of the first pixel of the second row of the first viewpoint of the autostereoscopic image, the third color dot (21B) of the first pixel of the second row of the second viewpoint of the autostereoscopic image, the first color dot (31R) of the first pixel of the second row of the third viewpoint, and so on up to the first color dot (N1R) of the first pixel of the second row of the $N^{th}$ viewpoint, this sequence subsequently being repeated for the following pixels of each of the viewpoints of the autostereoscopic image, namely with the second color dot (12V) of the second pixel of the second row of the first viewpoint of the autostereoscopic image, for the third color dot (22B) of the second pixel of the second row of the second viewpoint of the autostereoscopic image, for the first color dot (32B) of the second pixel of the second row of the third viewpoint of the autostereoscopic image, ... for the first color dot (N2R) of the second pixel of the second row of the $N^{th}$ viewpoint, up to the last color dot which is the first color dot (NqR) of the $q^{th}$ pixel of the second row of the $N^{th}$ viewpoint:

- and the third row of a said group of three rows successively displays the third color dot (11B) of the first pixel of the third row of the first viewpoint, the first color dot (21R) of the first pixel of the third row of the second viewpoint, the second color dot (31G) of the first pixel of the third row of the third viewpoint and so on up to the second color dot (N1V) of the first pixel of the third row of the $N^{th}$ viewpoint, this sequence subsequently being repeated for the following pixels of the third row of each of the viewpoints, namely with the third color dot (12B) of the second pixel of the third row of the first viewpoint, the first color dot (22R) of the second pixel of the third row of the second viewpoint, the second color dot (32V) of the second pixel of the third row of the third viewpoint, ... for the second color dot (N2V) of the second pixel of the third row of the $N^{th}$ viewpoint, up to the last color dot which is the second color (NqV) of the third row of the $N^{th}$ viewpoint.

5.  The method as claimed in either of claims 3 and 4, **characterized in that** the screen has at least one group of three rows whose pixels have three color dots disposed over three successive columns of color dots, the color dots being permutated from one row to another, the first row comprising display pixels each of which is successively composed of a first color dot, of a second color dot and of a third color dot, the second row comprising display pixels each of which is successively composed of a second color dot, of a third color dot and of a first color dot, and the third row comprising display pixels each of which is successively composed of a third color dot, of a first color dot and of a second color dot.

6.  The method as claimed in claim 5, **characterized in that**, for viewing the autostereoscopic image, it implements an angular selection array, such as a lenticular array or a parallax array, having one axis parallel to said columns of color dots.

7.  The method as claimed in claim 2, **characterized in that** N = 2 and, for a group of 2 rows comprising first and second rows, **in that**:

    - the first row of a group of two rows of the screen successively displays the first color dot (11R) of the first pixel of the first row of the first viewpoint of the autostereoscopic image, the second color dot (21V) of the first pixel of the first row of the second viewpoint of the autostereoscopic image, the third color dot (11B) of the first pixel of the first row of the first viewpoint of the autostereoscopic image, and so on up to the third color dot (2pB) of the $p^{th}$ pixel of the first row of the second viewpoint of the autostereoscopic image;

    - the second row of a group of two rows of the screen successively displays the first color dot of the first pixel (21R) of the second row of the second viewpoint of the autostereoscopic image, the second color dot of the first pixel (11V) of the second row of the first viewpoint of the autostereoscopic image, the third color dot (21B) of the first pixel of the second row of the second viewpoint of the autostereoscopic image, and so on up to the third color dot (1pB) of the pixel of the second row of the first viewpoint of the autostereoscopic image.

8.  The method as claimed in claim 2, **characterized in that** N > 3 and, for a group of N rows comprising first, second, and third rows, ... and an N<sup>th</sup> row, **in that**:
For the first row of said group:

- a first color dot (11R, 12R, 13R, ...) of the pixels of the first row of a said first viewpoint is displayed on the color dots of rank 1 modulo 3N of the display pixels of the first row, a second color dot (11G, 12G, 13G ...) of the pixels of the first row of a said first viewpoint is displayed on the color dots of rank 1 + N modulo 3N of the display pixels of the first row, and a third color dot (11B, 12B, 13B ...) of the pixels of the first row of said first viewpoint is displayed on the color dots of rank 1 + 2N modulo 3N of the display pixels of the first row;

- a second color dot (21G, 22G, 23G ...) of the pixels of the first row of a said second viewpoint is displayed on the color dots of rank 2 modulo 3N of the display pixels of the first row, a third color dot (21B, 22B, 23B ... ) of the pixels of the first row of said second viewpoint is displayed on the color dots of rank 2 + N modulo 3N of the display pixels of the first row, and a first color dot (21R, 22R, 23R ...) of the pixels of the first row of said second viewpoint is displayed on the color dots of rank 2 + 2N modulo 3N of the display pixels of the first row;

- a third color dot of the pixels (31B, 32B, 33B ...) of the first row of a said third viewpoint is displayed on the color dots of rank 3 modulo 3N of the display pixels of the first row, a first color dot (31R, 32R, 33R ...) of the pixels of the first row of said third viewpoint is displayed on the color dots of rank 3 + N modulo 3N of the display pixels of the first row, and a second color dot (31G, 32G, 33G ...) of the pixels of the first row of said third viewpoint is displayed on the color dots of rank 3 + 2N modulo 3N of the display pixels of the first row, etc...;

- and an $R_0$(N/3)<sup>th</sup> color dot of the pixels of the first row of the N<sup>th</sup> viewpoint is displayed on the color dots of rank N modulo 3N of the display pixels of the first row, a second color dot (N1V, N2V, ...) for $R_0$(R/3 = 1 or a first color dot (N1R, N2R, ....) for $R_0$(N/3) = 2 of the pixels of the first row of the N<sup>th</sup> viewpoint is displayed on the color dots of rank 2N modulo 3N of the display pixels of the first row, and the third color dot (N1B) of the pixels of the first row of the N<sup>th</sup> viewpoint is displayed on the color dot of rank 3N modulo 3N of the display pixels of the first row; $R_0$(N/3) denoting the remainder (1 or 2) of the division of N by 3.

for the second row of said group:
- a second color dot of the pixels (11V, 12V, 13V ...) of the second row of a said first viewpoint is displayed on the color dots of rank 2 modulo 3N of the display pixels of the second row, a third color dot (11B, 12B, 13B ...) of the pixels of the second row of said first viewpoint is displayed on the color dots of rank 2 + N modulo 3N of the display pixels of the second row, and a first color dot (11R, 12R, 13R ...) of the pixels of the second row of said first viewpoint is displayed on the color dots of rank 2 + 2N modulo 3N of the display pixels of the second row;

- a third color dot (21B, 22B, 23B ...) of the pixels of the second row of a said second viewpoint is displayed on the color dots of rank 3 modulo 3N of the display pixels of the second row, a first color dot (21R, 22R, 23R ...) of the pixels of the second row of said second viewpoint is displayed on the color dots of rank 3 + N modulo 3N of the display pixels of the second row, and a second color dot (21V, 22V, 23V ...) of the pixels of the second row of said second viewpoint is displayed on the color dots of rank 3 + 2N modulo 3N of the display pixels of the second row;

- a first color dot (31R, 32R, 33R, ...) of the pixels of the second row of a said third viewpoint is displayed on the color dots of rank 4 modulo 3N of the display pixels of the second row, a second color dot (31V, 32V, 33V ...) of the pixels of the second row of said third viewpoint is displayed on the color dots of rank 4 + N modulo 3N of the display pixels of the second row, and a third color dot (31B, 32B, 33B ...) of the pixels of the second row of said third viewpoint is displayed on the color dots of rank 4 + 2N modulo 3N of the display pixels of the second row, etc...;

- and a first color dot of the pixels of the second row of the N<sup>th</sup> viewpoint is displayed on the color dots 1 modulo 3N of the display pixels of the second row, the second (for $R_0$ (N/3) = 1) or the third (for $R_0$(N/3) = 2) color dot for the pixels of the second row of the N<sup>th</sup> viewpoint is displayed on the color dots of rank N + 1 modulo 3N of the display pixels of the second row, and the third (for $R_0$(N/3) = 1) or the second (for $R_0$(N/3) = 2) color dot of the pixels of the second row of the N<sup>th</sup> viewpoint is displayed on the color dots of rank 2N + 1 modulo 2N of the display pixels of the second row;

for the third row of said group:
- a third color dot (11B, 12B, 13B ...) of the pixels of the third row of a said first viewpoint is displayed on the color dots of rank 3 modulo 3N of the display pixels of the third row, a first color dot (11R, 12R, 13R ...) of the pixels of the third row of a said first viewpoint is displayed on the color dots of rank 3 + N modulo 3N of the display pixels of the third row, and a second color dot (11G, 12G, 13G ...) of the pixels of the third row of said first viewpoint is displayed on the color dots of rank 1 + 2N modulo 3N of the display pixels of the third row;

- a first color dot (21R, 22R, 23R ...) of the pixels of the third row of a said second viewpoint is displayed on the color dots of rank 4 modulo 3N of the display pixels of the third row, a second color dot (21G, 22G, 23G ...) of the pixels of the third row of said second viewpoint is displayed on the color dots of rank 4 + N modulo 3N of the display pixels of the third row, and a first color dot (21R, 22R, 23R ...) of the pixels of the third row of said second viewpoint is displayed on the color dots of rank 4 + 2N modulo 3N of the display pixels of the third row;
- a second color dot (31V, 32V, 33V ...) of the pixels of the third row of a said third viewpoint is displayed on the color dots of rank 5 modulo 3N of the display pixels of the third row, a third color dot (31B, 32B, 33B ...) of the pixels of the third row of said third viewpoint is displayed on the color dots of rank 5 + N modulo 3N of the display pixels of the third row, and a first color dot (31R, 32R, 33R ...) of the pixels of the third row of said third viewpoint, is displayed on the color dots of rank 5 + 2N modulo 3N of the display pixels of the third row, etc...;
- and a second color dot of the pixels of the third row of the $N^{th}$ viewpoint is displayed on the color dots 2 modulo 3N of the display pixels of the third row, a third (for $R_0(N/3) = 1$) or a first (for $R_0(N/3) = 2$) color dot of the pixels of the third row of the $N^{th}$ viewpoint is displayed on the color dots of rank N + 2 modulo 3N of the display pixels of the third row, and a first (for $R_0(N/3) = 1$) or a third (for $R_0(N/3) = 2$) color dot of the pixels of the third row of the $N^{th}$ viewpoint is displayed on the color dot of rank 2N + 2 modulo 3N of the display pixels of the third row, and so on by circular permutation up to the $N^{th}$ row.

9. The method as claimed in either of claims 7 and 8, **characterized in that**, for viewing said autostereoscopic images, it implements a screen equipped with an angular selection array whose main axes are parallel to a diagonal of the color dots and whose pitch PR allows N color dots to be covered.

10. The method as claimed in claim 1, **characterized in that** N is a multiple of 3 and **in that** only one color dot of each pixel of the autostereoscopic image to be displayed is used and **in that** a first row of the screen successively displays the first color dot (11R) of the first pixel of the first row of the first viewpoint of the autostereoscopic image, the second color dot (21V) of the first pixel of the first row of the second viewpoint of the autostereoscopic image, and so on up to the third color dot (N1B) of the first pixel of the first row of the $N^{th}$ viewpoint of the autostereoscopic image, the sequence subsequently being repeated for the second pixel of each viewpoint of the first row of the autostereoscopic image and the following ones.

11. The method as claimed in claim 10, **characterized in that** the second row of the screen successively displays the second color dot (11V) of the first pixel of the second row of the first viewpoint of the autostereoscopic image, the third color dot (21B) of the first pixel of the second row of the second viewpoint of the autostereoscopic image, and so on up to the first color dot (N1R) of the first pixel of the second row of the $N^{th}$ viewpoint of the autostereoscopic image, the sequence subsequently being repeated for the second pixel of each viewpoint of the second row of the autostereoscopic image and the following ones, and **in that** the third row of the screen successively displays the third color dot (11V) of the first pixel of the third row of the first viewpoint of the autostereoscopic image, the first color dot (21R) of the first pixel of the second row of the second viewpoint of the autostereoscopic image, and so on up to the second color dot (N1V) of the first pixel of the second row of the $N^{th}$ viewpoint of the autostereoscopic image, the sequence subsequently being repeated for the second pixel of each viewpoint of the third row of the autostereoscopic image and the following ones, and also being repeated for the groups of three rows of the screen that follow the group formed by said first, second and third rows of the screen.

12. The method as claimed in claim 11, **characterized in that** the screen has at least one group of three rows whose pixels have three color dots disposed over three successive columns of color dots, the color dots being permutated from one row to another, the first row comprising display pixels each of which is successively composed of a first color dot, of a second color dot and of a third color dot, the second row comprising display pixels each of which is successively composed of a second color dot, of a third color dot and of a first color dot, and the third row comprising display pixels each of which is successively composed of a third color dot, of a first color dot and of a second color dot.

13. The method as claimed in claim 12, **characterized in that** it implements, for viewing the autostereoscopic image on a screen, an angular selection array, such as a lenticular array or a parallax array, having one axis parallel to said columns of color dots.

14. The method as claimed in claim 10, **characterized in that** the second row of the screen successively displays, starting from the second position, the second color dot (11V) of the first pixel of the second row of the first viewpoint of the autostereoscopic image, the third color dot (21B) of the first pixel of the second row of the second viewpoint of the autostereoscopic image, and so on up to the first color dot (N1R) of the first pixel of the second row of the $N^{th}$ viewpoint of the autostereoscopic image, the sequence subsequently being repeated for the second pixel of each viewpoint of the second row of the autostereoscopic image then the following ones, and **in that** the third row of the screen successively displays in the third position the third color dot (11B) of the first pixel of the third row of the first viewpoint of the autostereoscopic image, the first color dot (21R) of the first pixel of the third row of the second viewpoint of the autostereoscopic image, and so on up to the second color dot (N1V) of the first pixel of the third row of the N<sup>th</sup> viewpoint of the autostereoscopic image, the sequence subsequently being repeated for the second pixel of each viewpoint of the third row of the autostereoscopic image, then the following ones.

15. The method as claimed in claim 14, **characterized in that**, for displaying said autostereoscopic images, it implements a screen equipped with an angular selection array whose axes are parallel to diagonal of the color dots and whose pitch PR allows N color dots to be covered.

16. The method as claimed in one of the preceding claims, **characterized in that** p = q' /N, p denoting the pixel number of one viewpoint and q' denoting the number of the display pixels of the rows of the screen.

17. The method as claimed in one of claims 1 to 16, **characterized in that** p < q'/N.

**Patentansprüche**

1. Verfahren zur Anzeige eines autostereoskopischen Bildes mit N Blickpunkten auf zumindest einem Teil eines Schirms, der Anzeigepixel aufweist, die in Zeilen und Spalten angeordnet sind, wobei jedes Anzeigepixel einen ersten, einen zweiten und einen dritten Farbpunkt aufweist, die auf einer gleichen Zeile ausgerichtet sind und von denen jeder eine unterschiedliche Farbe hat (R.V.B.), wobei das erste Anzeigepixel einer Zeile durch Farbpunkte der Rangstufe 1 bis 3 gebildet ist, wobei das zweite Anzeigepixel einer Zeile durch die Farbpunkte der Rangstufe 4 bis 6 gebildet ist, ... wobei das Anzeigepixel der Rangstufe q einer Zeile durch die Farbpunkte der Rangstufe (3q-2) bis 3q gebildet ist, wobei beim Verfahren N größer als 1 ist und die Pixel eines anzuzeigenden autostereoskopischen Bildes in der Weise angezeigt werden, dass die drei Farbpunkte von jedem Anzeigepixel 3 Farbpunkte der entsprechenden Farbkomponente der Pixel des autostereoskopischen Bildes anzeigen, das von zumindest zwei Pixeln der gleichen Rangstufe von zumindest zwei unterschiedlichen Blickpunkten stammt, **dadurch gekennzeichnet, dass** für zumindest eine Gruppe von zwei aufeinanderfolgenden Zeilen des Bildes, das zumindest eine ersten, eine zweiten und eine dritte Zeile aufweist, wenn von einer Zeile der Gruppe zu einer benachbarten Zeile gegangen wird, die räumliche Verteilung von drei Farbpunkten um eine einem Farbpunkt entsprechende Stufe versetzt ist.

2. Verfahren nach Anspruch 1, **dadurch gekennzeichnet, dass** N kein Vielfaches von 3 ist und dass die Pixel eines anzuzeigenden autostereoskopischen Bildes angezeigt werden, indem die drei Farbpunkte von jedem Pixel des autostereoskopischen Bildes zwischen den drei Farbpunkten der entsprechenden Farbkomponente von zumindest zwei unterschiedlichen Anzeigepixeln räumlich verteilt werden.

3. Verfahren nach Anspruch 2, **dadurch gekennzeichnet, dass** N=2 ist und dass

- die erste Zeile einer Gruppe von drei Zeilen des Schirms aufeinanderfolgend den ersten Farbpunkt (11 R) des ersten Pixel der ersten Zeile des ersten Blickpunktes des autostereoskopischen Bildes, den zweiten Farbpunkt (21V) des ersten Pixels der ersten Zeile des zweiten Blickpunktes des autostereoskopischen Bildes, den dritten Farbpunkt (11 B) des ersten Pixels der ersten Zeile des ersten Blickpunktes des autostereoskopischen Bildes und so weiter bis zum dritten Farbpunkt (2pB) des p-ten Pixels der ersten Zeile des zweiten Blickpunktes des autostereoskopischen Bildes anzeigt,
- die zweite Zeile einer Gruppe von drei Zeilen des Schirms aufeinanderfolgend den zweiten Farbpunkt (11V) des ersten Pixel der zweiten Zeile des ersten Blickpunktes des autostereoskopischen Bildes, den dritten Farbpunkt des ersten Pixels (21 B) der zweiten Zeile des zweiten Blickpunktes des autostereoskopischen Bildes, den ersten Farbpunkt (11R) des ersten Pixels der zweiten Zeile des ersten Blickpunktes des autostereoskopischen Bildes und so weiter bis zum ersten Farbpunkt (2pR) des p-ten Pixels der zweiten Zeile des zweiten Blickpunktes des autostereoskopischen Bildes anzeigt,
die dritte Zeile einer Gruppe von drei Zeilen des Schirms aufeinanderfolgend den dritten Farbpunkt (11 B) des ersten Pixel der dritten Zeile des ersten Blickpunktes des autostereoskopischen Bildes, den ersten Farbpunkt (21 R) des ersten Pixels der dritten Zeile des zweiten Blickpunktes des autostereoskopischen Bildes, den zweiten Farbpunkt (11V) des ersten Pixels der dritten Zeile des ersten Blickpunktes des autostereoskopischen Bildes und so weiter bis zum zweiten Farbpunkt (2pR) des p-ten Pixels der dritten Zeile des zweiten Blickpunktes des autostereoskopischen Bildes anzeigt.

4. Verfahren nach Anspruch 2, **dadurch gekennzeichnet, dass** N>3 ist und dass

- die erste Zeile einer Gruppe von drei Zeilen des Schirms aufeinanderfolgend den ersten Farbpunkt (11 R) des ersten Pixel der ersten Zeile des ersten Blickpunktes des autostereoskopischen Bildes, den zweiten Farbpunkt (21V) des ersten Pixels der ersten Zeile des zweiten Blickpunktes des autostereoskopischen Bildes, den dritten Farbpunkt (31 B) des ersten Pixels der ersten Zeile des dritten Blickpunktes des autostereoskopischen Bildes und so weiter bis zum Idritten Farbpunkt (N1B) des ersten Pixels der ersten Zeile des N-ten Blickpunktes anzeigt, wobei sich diese Abfolge für die nachfolgenden Pixel der ersten Zeile des autostereoskopischen Bildes wiederholt, und zwar für den ersten Farbpunkt (12R) des zweiten Pixels der ersten Zeile des ersten Blickpunktes des autostereoskopischen Bildes, für den zweiten Farbpunkt (22V) des zweiten Pixels der ersten Zeile des zweiten Blickpunktes des autostereoskopischen Bildes...für den dritten Farbpunkt des zweiten Pixels der ersten Zeile des N-ten Blickpunktes bis zum letzten Farbpunkt, der der dritte Farbpunkt (N98) des q-ten Pixels der ersten Zeile des N-ten Blickpunktes ist,

- die zweite Zeile einer genannten Gruppe von drei Zeilen aufeinanderfolgend den zweiten Farbpunkt (11V) des ersten Pixel der zweiten Zeile des ersten Blickpunktes des autostereoskopischen Bildes, den dritten Farbpunkt (21 B) des ersten Pixels der zweiten Zeile des zweiten Blickpunktes des autostereoskopischen Bildes, den ersten Farbpunkt (31 R) des ersten Pixels der zweiten Zeile des dritten Blickpunktes des autostereoskopischen Bildes und so weiter bis zum ersten Farbpunkt (N1R) des ersten Pixels der zweiten Zeile des N-ten Blickpunktes anzeigt, wobei sich diese Abfolge dann für die nachfolgenden Pixel von jedem der Blickpunktes des autostereoskopischen Bildes wiederholt, und zwar für den zweiten Farbpunkt (12V) des zweiten Pixels der zweiten Zeile des ersten Blickpunktes des autostereoskopischen Bildes, für den dritten Farbpunkt (22B) des zweiten Pixels der zweiten Zeile des zweiten Blickpunktes des autostereoskopischen Bildes, für den ersten Farbpunkt (32R) des zweiten Pixels der zweiten Zeile des dritten Blickpunktes des autostereoskopischen Bildes, ... für den ersten Farbpunkt (N2R) des zweiten Pixels der zweiten Zeile des N-ten Blickpunktes bis zum letzten Farbpunkt, der der ersten Farbpunkt (NqR) des q-ten Pixels der zweiten Zeile des N-ten Blickpunktes ist,

- und die dritte Zeile einer genannten Gruppe von drei Zeilen aufeinanderfolgend den dritten Farbpunkt (11B) des ersten Pixel der dritten Zeile des ersten Blickpunktes, den ersten Farbpunkt (21R) des ersten Pixels der dritten Zeile des zweiten Blickpunktes, den zweiten Farbpunkt (31V) des ersten Pixels der dritten Zeile des dritten Blickpunktes und so weiter bis zum zweiten Farbpunkt (N1V) des ersten Pixels der dritten Zeile des N-ten Blickpunktes anzeigt, wobei sich diese Abfolge anschließend für die nachfolgenden Pixel der dritten Zeile von jedem Blickpunkt wiederholt, und zwar mit dem dritten Farbpunk (12B) des zweiten Pixels der dritten Zeile des ersten Blickpunktes, dem ersten farbpunkt (22R) des zweiten Pixels der dritten Zeile des zweiten Blickpunktes, dem zweiten farbpunkt (32V) des zweiten Pixels der dritten Zeile des dritten Blickpunktes, ... für den zweiten Farbpunkt (N2V) des zweiten Pixels der dritten Zeile des N-ten Blickpunkts bis zum letzten Farbpunkt, der der zweite Farbpunkt (NqV) des q-ten Pixels der dritten Zeile des N-ten Blickpunkts ist.

5. Verfahren nach einem der Ansprüche 3 oder 4, **dadurch gekennzeichnet, dass** der Schirm zumindest eine Gruppe von drei Zeilen hat, deren Pixel drei Farbpunkte hat, die in drei aufeinanderfolgenden Spalten der Farbpunkte angeordnet sind, wobei die Farbpunkte von einer Zeile zur anderen vertauscht sind, wobei die erste Zeile Anzeigepixel aufweist, von denen jedes aufeinanderfolgend aus einem ersten Farbpunkt, einem zweiten Farbpunkt und einem dritten Farbpunkt zusammengesetzt ist, wobei die zweite Zeile Anzeigepixel aufweist, von denen jedes aufeinanderfolgend aus einem zweiten Farbpunkt, einem dritten Farbpunkt und einem ersten Farbpunkt zusammengesetzt ist und die dritte Zeile Anzeigepixel aufweist, von denen jedes aufeinanderfolgend aus einem dritten Farbpunkt, einem ersten Farbpunkt und einem zweiten Farbpunkt zusammengesetzt ist.

6. Verfahren nach Anspruch 5, **dadurch gekennzeichnet, dass** dieses für die Visualisierung des autostereoskopischen Bildes ein Winkelauswahlgitter, wie ein Linsengitter oder ein Parallaxengitter, bei dem eine Achse parallel zu den genannten Spalten der Farbpunkte verläuft, umsetzt.

7. Verfahren nach Anspruch 2, **dadurch gekennzeichnet, dass** N=2 ist und dass für eine Gruppe von zwei Zeilen, die eine erste und eine zweite Zeile aufweist, gilt

- die erste Zeile einer Gruppe von zwei Zeilen des Schirms zeigt aufeinanderfolgend den ersten Farbpunkt (11R) des ersten Pixels der ersten Zeile des ersten Blickpunktes des autostereoskopischen Bildes, den zweiten Farbpunkt (21 V) des ersten Pixels der ersten Zeile des zweiten Blickpunktes des autostereoskopischen Bildes, den dritten Farbpunkt (11 B) des ersten Pixels der ersten Zeile des ersten Blickpunktes des autostereoskopischen Bildes und so weiter bis zum dritten Farbpunkt (2pB) des p-ten Pixels der ersten Zeile des zweiten Blickpunktes des autostereoskopischen Bildes an,

- die zweite Zeile einer Gruppe von zwei Zeilen des Schirms zeigt aufeinanderfolgend den ersten Farbpunkt des ersten Pixels (21 R) der zweiten Zeile des zweiten Blickpunktes des autostereoskopischen Bildes, den zweiten Farbpunkt des ersten Pixels (11V) der zweiten Zeile des ersten Blickpunktes des autostereoskopischen Bildes, den dritten Farbpunkt (11 B) des ersten Pixels der zweiten Zeile des zweiten Blickpunktes des autostereoskopischen Bildes und so weiter bis zum dritten Farbpunkt (1pB) des p-ten Pixels der zweiten Zeile des ersten Blickpunktes des autostereoskopischen Bildes an

**8.** Verfahren nach Anspruch 2, **dadurch gekennzeichnet, dass** N>3 ist und für eine Gruppe von N Zeilen mit einer ersten, einer zweiten, einer dritten Zeile, ... und einer N-ten Zeile gilt:
für die erste Zeile der genannten Gruppe:

- ein erster Farbpunkt (11 R, 12R, 13R ...) der Pixel der ersten Zeile eines genannten ersten Blickpunkts wird auf den Farbpunkten der Rangstufe 1 modulo 3N der Anzeigepixel der ersten Zeile angezeigt, ein zweiter Farbpunkt (11V, 12V, 13V...) der Pixel der ersten Zeile eines genannten Blickpunktes wird auf den Farbpunkten der Rangstufe 1+N modulo 3N der Anzeigepixel der ersten Zeile angezeigt und ein dritter Farbpunkt (11 B, 12B, 13B...) der Pixel der ersten Zeile des ersten Blickpunktes wird auf den Farbpunkten der Rangstufe 1+2N modulo 3N der Anzeigepixel der ersten Zeile angezeigt,

- ein zweiter Farbpunkt (21V, 22V, 23V...) der Pixel der ersten Zeile eines genannten zweiten Blickpunktes wird auf den Farbpunkten der Rangstufe 2 modulo 3N der Anzeigepixel der ersten Zeile angezeigt, ein dritter Farbpunkt (21 B, 22B, 23B...) der Pixel der ersten Zeile des zweiten Blickpunktes wird auf den Farbpunkten der Rangstufe 2+N modulo 3N der Anzeigepixel der ersten Zeile angezeigt und ein dritter Farbpunkt (21R, 22R, 23R...) der Pixel der ersten Zeile des zweiten Blickpunktes wird auf den Farbpunktten der Rangstufe 2+2N modulo 3N der Anzeigepixel der ersten Zeile angezeigt,

- ein dritter Farbpunkt der Pixel (31 B, 32B, 33B ...) der ersten Zeile eines genannten dritten Blickpunktes wird auf den Farbpunkten der Rangstufe 3 modulo 3N der Anzeigepixel der ersten Zeile angezeigt, ein erster Farbpunkt (31R, 32R, 33R...) der Pixel der ersten Zeile des dritten Blickpunktes wird auf den Farbpunkten der Rangstufe 3+N modulo 3N der Anzeigepixel der ersten Zeile angezeigt und ein zweiter Farbpunkt (31 V, 32V, 33V...) der Pixel der ersten Zeile des dritten Blickpunktes wird auf den Farbpunkten der Rangstufe 3+2N modulo 3N der Anzeigepixel der ersten Zeile angezeigt, usw....

- und ein $R_0(N/3)$-ter Farbpunkt der Pixel der ersten Zeile des N-ten Blickpunktes wird auf den Farbpunkten der Rangstufe 3 modulo 3N der Anzeigepixel der ersten Zeile angezeigt, ein zweiter Farbpunkt (N1V, N2V,...) für $R_0(N/3)=1$ oder ein erster Farbpunkt (N1R,N2R,...) für $R_0(N/3)=2$ der Pixel der ersten Zeile des N-ten Blickpunktes wird auf den Farbpunkten der Rangstufe 2N modulo 3N der Anzeigepixel der ersten Zeile angezeigt und der dritte Farbpunkt (N1B) der Pixel der ersten Zeile des N-ten Blickpunktes wird auf den Farbpunkten der Rangstufe 3N modulo 3N der Anzeigepixel der ersten Zeile angezeigt, wobei $R_0(N/3)$ den Rest (1 oder 2) der Division von N durch 3 bezeichnet

für die zweite Zeile der genannten Gruppe:

- ein zweiter Farbpunkt der Pixel (11V, 12V, 13V ...) der zweiten Zeile eines genannten ersten Blickpunktes wird auf den Farbpunkten der Rangstufe 2 modulo 3N der Anzeigepixel der zweiten Zeile angezeigt, ein dritter Farbpunkt (11 B, 12B, 13B...) der Pixel der zweiten Zeile des ersten Blickpunktes wird auf den Farbpunkten der Rangstufe 2+N modulo 3N der Anzeigepixel der zweiten Zeile angezeigt und ein dritter Farbpunkt (11 R, 12R, 13R...) der Pixel der zweiten Zeile des ersten Blickpunktes wird auf den Farbpunkten der Rangstufe 2+2N modulo 3N der Anzeigepixel der zweiten Zeile angezeigt,

- ein dritter Farbpunkt (21 B, 22B, 23B...) der Pixel der zweiten Zeile eines genannten zweiten Blickpunktes wird auf den Farbpunkten der Rangstufe 3 modulo 3N der Anzeigepixel der zweiten Zeile angezeigt, ein erster Farbpunkt (21 R, 22R, 23R...) der Pixel der zweiten Zeile des zweiten Blickpunktes wird auf den Farbpunkten der Rangstufe 3+N modulo 3N der Anzeigepixel der zweiten Zeile angezeigt und ein zweiter Farbpunkt (21V, 22V, 23V...) der Pixel der zweiten Zeile des zweiten Blickpunktes wird auf den Farbpunkten der Rangstufe 3+2N modulo 3N der Anzeigepixel der zweiten Zeile angezeigt, usw....

- ein erster Farbpunkt (31 R, 32R, 33R ...) der Pixel der zweiten Zeile eines genannten dritten Blickpunkts wird auf den Farbpunkten der Rangstufe 4 modulo 3N der Anzeigepixel der zweiten Zeile angezeigt, ein zweiter Farbpunkt (31V, 32V, 33V...) der Pixel der zweiten Zeile des genannten dritten Blickpunktes wird auf den Farbpunkten der Rangstufe 4+N modulo 3N der Anzeigepixel der zweiten Zeile angezeigt und ein dritter Farbpunkt (31B, 32B, 33B...) der Pixel der zweiten Zeile des dritten Blickpunktes wird auf den Farbpunkten der Rangstufe 4+2N modulo 3N der Anzeigepixel der zweiten Zeile angezeigt, usw...

- und ein erster Farbpunkt der Pixel der zweiten Zeile des N-ten Blickpunktes wird auf den Farbpunkten der Rangstufe 1 modulo 3N der Anzeigepixel der zweiten Zeile angezeigt, der zweite (für $R_0(N/3)=1$) oder der dritte (für $R_0(N/3)=2$) Farbpunkt für die Pixel der zweiten Zeile des N-ten Blickpunks wird auf den Farbpunkten der Rangstufe N+1 modulo 3N der Anzeigepixel der zweiten Zeile angezeigt, und der dritte (für $R_0(N/3)=1$) oder der zweite (für $R_0(N/3)=2$) Farbpunkt der Pixel der zweiten Zeile des N-ten Blickpunkts wird auf Farbpunkten der Rangstufe 2N+1 modulo 2N der Anzeigepixel der zweiten Zeile angezeigt,

für die dritte Zeile der genannten Gruppe:

- ein dritter Farbpunkt (11 B, 12B, 13B...) der Pixel der dritten Zeile eines genannten ersten Blickpunktes wird auf den Farbpunkten der Rangstufe 3 modulo 3N der Anzeigepixel der dritten Zeile angezeigt, ein erster Farbpunkt (11 R, 11 R, 23R...) der Pixel der dritten Zeile eines genannten ersten Blickpunktes wird auf den Farbpunkten der Rangstufe 3+N modulo 3N der Anzeigepixel der dritten Zeile angezeigt und ein zweiter Farbpunkt (11V, 12V, 13V...) der Pixel der dritten Zeile des ersten Blickpunktes wird auf den Farbpunkten der Rangstufe 1 +2N modulo 3N der Anzeigepixel der dritten Zeile angezeigt,

- ein erster Farbpunkt (21R, 22R, 23R ...) der Pixel der dritten Zeile eines genannten zweiten Blickpunkts wird auf den Farbpunkten der Rangstufe 4 modulo 3N der Anzeigepixel der dritten Zeile angezeigt, ein zweiter Farbpunkt (21V, 22V, 23V...) der Pixel der dritten Zeile des genannten zweiten Blickpunktes wird auf den Farbpunkten der Rangstufe 4+N modulo 3N der Anzeigepixel der dritten Zeile angezeigt und ein dritter Farbpunkt (21 R, 22R, 23R...) der Pixel der dritten Zeile des zweiten Blickpunktes wird auf den Farbpunkten der Rangstufe 4+2N modulo 3N der Anzeigepixel der dritten Zeile angezeigt,

- ein zweiter Farbpunkt (31V, 32V, 33V ...) der Pixel der dritten Zeile eines genannten dritten Blickpunktes wird auf den Farbpunkten der Rangstufe 5 modulo 3N der Anzeigepixel der dritten Zeile angezeigt, ein dritter Farbpunkt (31B, 32B, 33B...) der Pixel der dritten Zeile des dritten Blickpunktes wird auf den Farbpunkten der Rangstufe 5+N modulo 3N der Anzeigepixel der dritten Zeile angezeigt und ein erster Farbpunkt (31 R, 32R, 33R...) der Pixel der dritten Zeile des genannten dritten Blickpunktes wird auf den Farbpunkten der Rangstufe 5+2N modulo 3N der Anzeigepixel der dritten Zeile angezeigt, usw....

- und ein zweiter Farbpunkt der Pixel der dritten Zeile des N-ten Blickpunktes wird auf den Farbpunkten der 2 modulo 3N der Anzeigepixel der dritten Zeile angezeigt, ein dritter (für $R_0(N/3)=1$) oder ein erster (für $R_0(N/3)=2$) Farbpunkt der Pixel der dritten Zeile des N-ten Blickpunkts wird auf den Farbpunkten der Rangstufe N+2 modulo 3N der Anzeigepixel der dritten Zeile angezeigt, und ein erster (für $R_0(N/3)=1$) oder ein dritter (für $R_0(N/3)=2$) Farbpunkt der Pixel der dritten Zeile des N-ten Blickpunkts wird auf dem Farbpunkt der Rangstufe 2N+2 modulo 3N der Anzeigepixel der dritten Zeile angezeigt, und so weiter durch die Kreispermutation bis zur N-ten Zeile.

9. Verfahren nach einem der Ansprüche 7 oder 8, **dadurch gekennzeichnet, dass** dieses zur Anzeige der autostereoskopischen Bilder einen Bildschirm umsetzt, der mit einem Winkelauswahlgitter versehen ist, dessen Hauptachsen parallel zu einer Diagonale der Farbpunkte verlaufen und dessen Schritt bzw. Teilung PR das Abdecken von N Farbpunkten gestattet.

10. Verfahren nach Anspruch 1, **dadurch gekennzeichnet, dass** N ein Vielfaches von 3 ist und dass ein einziger Farbpunkt von jedem Pixel des anzuzeigenden autostereoskopischen Bildes verwendet wird und dass eine erste Zeile des Schirms aufeinanderfolgend den ersten Farbpunkt (11 R) des ersten Pixels der ersten Zeile des ersten Blickpunktes des autostereoskopischen Bildes anzeigt, den zweiten Farbpunkt (21V) des ersten Pixels der ersten Zeile des zweiten Blickpunktes des autostereoskopischen Bildes und so weiter bis zum dritten Farbpunkt (N1B) des ersten Pixels der ersten Zeile des N-ten Blickpunktes des autostereoskopischen Bildes anzeigt, wobei sich die Abfolge nachfolgend für das zweite Pixel von jedem Blickpunkt der ersten Zeile des autostereoskopischen Bildes und die folgenden wiederholt.

11. Verfahren nach Anspruch 10, **dadurch gekennzeichnet, dass** die zweite Zeile des Bildschirms aufeinanderfolgend den zweiten Farbpunkt (11V) des ersten Pixels der zweiten Zeile des ersten Blickpunktes des autostereoskopischen Bildes, den dritten Farbpunkt (21 B) des ersten Pixels der zweiten Zeile des zweiten Blickpunktes des autostereoskopischen Bildes und so weiter bis zum ersten Farbpunkt (N1R) des ersten Pixels der zweiten Zeile des N-ten Blickpunktes des autostereoskopischen Bildes anzeigt, wobei sich die Abfolge anschließend für das zweite Pixel von jedem Blickpunkt der zweiten Zeile des autostereoskopischen Bildes und die nachfolgenden wiederholt, und dass die dritte Zeile des Schirms aufeinanderfolgend den dritten Farbpunkt (11B) des ersten Pixels der dritten Zeile des ersten Blickpunktes des autostereoskopischen Bildes, den ersten Farbpunkt (21 R) des ersten Pixels der zweiten Zeile des zweiten Blickpunktes des autostereoskopischen Bildes, und so weiter bis zum zweiten Farbpunkt (N1V) des ersten Pixels der zweiten Zeile des N-ten Blickpunktes des autostereoskopischen Bildes anzeigt, wobei sich die Abfolge anschließend für das zweite Pixel von jedem Blickpunkt der dritten Zeile des autostereoskopischen Bildes und die folgenden wiederholt und sich diese ebenfalls für die Gruppen von drei Zeilen des Schirms wiederholt, die sich an die Gruppe anschließen, die durch die erste, zweite und dritte Zeile des Schirms gebildet ist.

12. Verfahren nach Anspruch 11, **dadurch gekennzeichnet, dass** der Schirm zumindest eine Gruppe von drei Zeilen aufweist, deren Pixel drei Farbpunkte darstellen, die in drei aufeinanderfolgenden Spalten der Farbpunkte angeordnet sind, wobei die Farbpunkte von einer Zeile zur anderen getauscht sind, wobei die erste Zeile Anzeigepixels aufweist, von denen sich jedes aufeinanderfolgend aus einem ersten Farbpunkt, einem zweiten Farbpunkt und einem dritten Farbpunkt zusammensetzt, wobei die zweite Zeile Anzeigepixel aufweist, von denen sich jedes aufeinanderfolgend aus einem zweiten Farbpunkt, einem dritten Farbpunkt und einem ersten Farbpunkt zusammensetzt, wobei die dritte Zeile Anzeigepixel aufweist, von denen sich jedes aufeinanderfolgend aus einem dritten Farbpunkt, einem ersten Farbpunkt und einem zweiten Farbpunkt zusammensetzt.

13. Verfahren nach Anspruch 12, **dadurch gekennzeichnet, dass** dieses für die Visualisierung des autostereoskopischen Bildes auf einem Schirm ein Winkelauswahlgitter umsetzt, wie ein Linsengitter oder ein Parallelengitter, das eine Achse hat, die parallel zu den genannten Spalten der Farbpunkte verläuft.

14. Verfahren nach Anspruch 10, **dadurch gekennzeichnet, dass** die zweite Zeile des Schirms aufeinanderfolgend von der zweiten Position den zweiten Farbpunkt (11V) des ersten Pixels der zweiten Zeile des ersten Blickpunktes des autostereoskopischen Bildes, den dritten Farbpunkt (21 B) des ersten Pixels der zweiten Zeile des zweiten Blickpunktes des autostereoskopischen Bildes, und so weiter bis zum ersten Farbpunkt (N1R) des ersten Pixels der zweiten Zeile des N-ten Blickpunktes des autostereoskopischen Bildes anzeige, wobei sich die Abfolge nachfolgend für das zweite Pixel von jedem Blickpunkt der zweiten Zeile des autostereoskopischen Bildes und dann die folgenden wiederholt, und dass die dritte Zeile des Schirms aufeinanderfolgend in der dritten Position den dritten Farbpunkt (11B) des ersten Pixels der dritten Zeile des ersten Blickpunktes des autostereoskopischen Bildes, den ersten Farbpunkt (21 R) des ersten Pixels der dritten Zeile des zweiten Blickpunktes des autostereoskopischen Bildes und so weiter bis zum zweiten Farbpunkt (N1V) des ersten Pixels der dritten Zeile des N-ten Blickpunktes des autostereoskopischen Bildes anzeigt, wobei sich die Abfolge anschließend für das zweite Pixel von jedem Blickpunkt der dritten Zeile des autostereoskopischen Bildes und dann die folgenden wiederholt.

15. Verfahren nach Anspruch 14, **dadurch gekennzeichnet, dass** dieses zur Anzeige der autostereoskopischen Bilder einen Schirm umsetzt der mit einem Winklauswahlgitter versehen ist, dessen Achsen parallel zur Diagonale der Farbpunkte verlaufen und dessen Schritt PR das Abdecken von N Farbpunkten gestattet.

16. Verfahren nach einem der vorhergehenden Ansprüche, **dadurch gekennzeichnet, dass** p =q'/N ist, wobei p die Pixelanzahl eines Blickpunktes anzeigt und q' die Anzeigepixelanzahl der Zeilen des Schirms anzeigt.

17. Verfahren nach einem der Ansprüche 1 bis 15 **dadurch gekennzeichnet, dass** p < q'/N.

## FIG1 N=4

L1  RL  L2  L3  L4

| | | P1 | | | P2 | | | P3 | | | P4 | | | P5 | |
|---|---|---|---|---|---|---|---|---|---|---|---|---|---|---|---|
| R 11R | V 21V | B 31B | R 41R | V 11V | B 21B | R 31R | V 41V | B 11B | R 21R | V 31V | B 41B | R 12R | V 22V | B 32B | R 42R |
| V 11V | B 21B | R 31R | V 41V | B 11B | R 21R | V 31V | B 41B | R 11R | V 21V | B 31B | R 41R | V 12V | B 22B | R 32R | V 42V |
| B 11B | R 21R | V 31V | B 41B | R 11R | V 21V | B 31B | R 41R | V 11V | B 21B | R 31R | V 41V | B 12B | R 22R | V 32V | B 42B |
| R 11R | V 21V | B 31B | R 41R | V 11V | B 21B | R 31R | V 41V | B 11B | R 21R | V 31V | B 41B | R 12R | V 22V | B 32B | R 42R |

Ligne n, Ligne n+1, Ligne n+2, Ligne n+3

Ligne n+4: V 11V  B 21B  R 31R  V 41V  B 11V  R 21R

## FIG2 N=8

L1  RL  L2  L3

| Ligne n | R 11R | V 21V | B 31B | R 41R | V 51V | B 61B | R 71R | V 81V | B 11B | R 21R | V 31V | B 41B | R 51R | V 61V | B 71B | R 81R | V 11V | B 21B | R 31R | V 41V |
|---|---|---|---|---|---|---|---|---|---|---|---|---|---|---|---|---|---|---|---|---|
| Ligne n+1 | V 11V | B 21B | R 31R | V 41V | B 51B | R 61R | V 71V | B 81B | R 11R | V 21V | B 31B | R 41R | V 51V | B 61B | R 71R | V 81V | B 11B | R 21R | V 31V | B 41B |
| Ligne n+2 | B 11B | R 21R | V 31V | B 41B | R 51R | V 61V | B 71B | R 81R | V 11V | B 21B | R 31R | V 41V | B 51B | R 61R | V 71V | B 81B | R 11R | V 21V | B 31B | R 41R |
| Ligne n+3 | R 11R | V 21V | B 31B | R 41R | V 51V | B 61B | R 71R | V 81V | B 11B | R 21R | V 31V | B 41B | R 51R | V 61V | B 71B | R 81R | V 11V | B 21B | R 31R | V 41V |

EP 1 779 181 B1

EP 1 779 181 B1

**FIG3 N=4**

L1  RL  L2  L3  L4  L5

| | | | | | | | | | | | | | | | | | | |
|---|---|---|---|---|---|---|---|---|---|---|---|---|---|---|---|---|---|---|
| **n** R 11R | V 21V | B 31B | R 41R | V 11V | B 21B | R 31R | V 41V | B 11B | R 21R | V 31V | B 41B | R 12R | V 22V | B 32B | R 42R | V 12V | B 22B | R 32R |
| **n+1** R 41R | V 11V | B 21B | R 31R | V 41V | B 11B | R 21R | V 31V | B 41B | R 11R | V 21V | B 31B | R 42R | V 12V | B 22B | R 32R | V 42V | B 12B | R 22R |
| **n+2** R 31R | V 41V | B 11B | R 21R | V 31V | B 41B | R 11R | V 21V | B 31B | R 41R | V 11V | B 21B | R 32R | V 42V | B 12B | R 22R | V 32V | B 42B | R 12R |
| **n+3** R 21R | V 31V | B 41B | R 11R | V 21V | B 31B | R 41R | V 11V | B 21B | R 31R | V 41V | B 11B | R 22R | V 32V | B 42B | R 42R | V 22V | B 32B | R 42R |

(annotations near L5: α, R, α, ℓ, L, d)

**FIG4 N=5**

L1  RL  L2  L3  L4

| | | | | | | | | | | | | | | | | | | | | |
|---|---|---|---|---|---|---|---|---|---|---|---|---|---|---|---|---|---|---|---|---|
| **Ligne n** R 11R | V 21V | B 31B | R 41R | V 51V | B 11B | R 21R | V 31V | B 41B | R 51R | V 11V | B 21B | R 31R | V 41V | B 51B | R 12R | V 22V | B 32B | R 42R | V 52V | B 12B |
| **Ligne n+1** R 51R | V 11V | B 21B | R 31R | V 41V | B 51B | R 11R | V 21V | B 31B | R 41R | V 51V | B 11B | R 21R | V 31V | B 41B | R 52R | V 12V | B 22B | R 32R | V 42V | B 52B |
| **Ligne n+2** R 41R | V 51V | B 11B | R 21R | V 31V | B 41B | R 51R | V 11V | B 21B | R 31R | V 41V | B 51B | R 11R | V 21V | B 31B | R 42R | V 52V | B 12B | R 22R | V 32V | B 42B |
| **Ligne n+3** R 31R | V 41V | B 51B | R 11R | V 21V | B 31B | R 41R | V 51V | B 11B | R 21R | V 31V | B 41B | R 51R | V 11V | B 21B | R 32R | V 42V | B 52B | R 12R | V 52V | B 12B |
| **Ligne n+4** R 21R | V 31V | B 41B | R 51R | V 11V | B 21B | R 31R | V 41V | B 51B | R 11R | V 21V | B 31B | R 41R | V 51V | B 11B | R 22R | V 32V | | | |

FIG5 N=7

FIG6 N=8

RL → | L1 | L2 | L3 ⇓ | L4 | L5

| Ligne | R | V | B | R | V | B | R | V | B | R | V | B | R | V | B | R | V | B | R | V | B | R | V | B | R | V | B | R | V | B | R | V | B | R | V | B |
|---|---|---|---|---|---|---|---|---|---|---|---|---|---|---|---|---|---|---|---|---|---|---|---|---|---|---|---|---|---|---|---|---|---|---|---|---|
| n | 11R | 21V | 31B | 41R | 51V | 61B | 71R | 81V | 11B | 21R | 31V | 41B | 51R | 61V | 71B | 81R | 11V | 21B | 31R | 41V | 51B | 61R | 71V | 81B | 12R | 22V | 32B | 42R | 52V | 62B | 72R | 82V | 12B | 22R | 32V | 42B |
| n+1 | 81R | 11V | 21B | 31R | 41V | 51B | 61R | 71V | 81B | 11R | 21V | 31B | 41R | 51V | 61B | 71R | 81V | 11B | 21R | 31V | 41B | 51R | 61V | 71B | 82R | 12V | 22B | 32R | 42V | 52B | 62R | 72V | 82B | 12R | 22V | 32B |
| n+2 | 71R | 81V | 11B | 21R | 31V | 41B | 51R | 61V | 71B | 81R | 11V | 21B | 31R | 41V | 51B | 61R | 71V | 81B | 11R | 21V | 31B | 41R | 51V | 61B | 72R | 82V | 12B | 22R | 32V | 42B | 52R | 62V | 72B | 82R | 12V | 22B |
| n+3 | 61R | 71V | 81B | 11R | 21V | 31B | 41R | 51V | 61B | 71R | 81V | 11B | 21R | 31V | 41B | 51R | 61V | 71B | 81R | 11V | 21B | 31R | 41V | 51B | 62R | 72V | 82B | 12R | 22V | 32B | 42R | 52V | 62B | 72R | 82V | 12B |
| n+4 | 51R | 61V | 71B | 81R | 11V | 21B | 31R | 41V | 51B | 61R | 71V | 81B | 11R | 21V | 31B | 41R | 51V | 61B | 71R | 81V | 11B | 21R | 31V | 41B | 52R | 62V | 72B | 82R | 12V | 22B | 32R | 42V | 52B | 62R | 72V | 82B |
| n+5 | 41R | 51V | 61B | 71R | 81V | 11B | 21R | 31V | 41B | 51R | 61V | 71B | 81R | 11V | 21B | 31R | 41V | 51B | 61R | 71V | 81B | 11R | 21V | 31B | 42R | 52V | 62B | 72R | 82V | 12B | 22R | 32V | 42B | 52R | 62V | 72B |
| n+6 | 31R | 41V | 51B | 61R | 71V | 81B | 11R | 21V | 31B | 41R | 51V | 61B | 71R | 81V | 11B | 21R | 31V | 41B | 51R | 61V | 71B | 81R | 11V | 21B | 32R | 42V | 52B | 62R | 72V | 82B | 12R | 22V | 32B | 42R | 52V | 62B |
| n+7 | 21R | 31V | 41B | 51R | 61V | 71B | 81R | 11V | 21B | 31R | 41V | 51B | 61R | 71V | 81B | 11R | 21V | 31B | 41R | 51V | 61B | 71R | 81V | 11B | 22R | 32V | 42B | 52R | 62V | 72B | 82R | 12V | 22B | 32R | 42V | 52B |
| n+8 | 11R | 21V | 31B | 41R | 51V | 61B | 71R | 81V | 11B | 21R | 31V | 41B | 51R | 61V | 71B | 81R | 11V | 21B | 31R | 41V | 51B | 61R | 71V | 81B | 12R | 22V | 32B | 42R | 52V | 62B | 72R | 82V | 12B | 22R | 32V | 42B |

EP 1 779 181 B1

Point de vue N°1/4    FIG 7a

Point de vue N°2/4    FIG 7b

EP 1 779 181 B1

Point de vue N°3/4   FIG 7c

Point de vue N°4/4   FIG 7d

FIG 8a    Point de vue n°1/8

FIG 8b    Point de vue n°2/8

FIG 8c    Point de vue n°3/8

FIG 8d    Point de vue n°4/8

Pixels

Ligne n
Ligne n+1
Ligne n+2
Ligne n+3
Ligne n+4
Ligne n+5
Ligne n+6
Ligne n+7
Ligne n+8

**FIG 8e    Point de vue n°5/8**

Pixels

Ligne n
Ligne n+1
Ligne n+2
Ligne n+3
Ligne n+4
Ligne n+5
Ligne n+6
Ligne n+7
Ligne n+8

**FIG 8f    Point de vue n°6/8**

Pixels

Ligne n
Ligne n+1
Ligne n+2
Ligne n+3
Ligne n+4
Ligne n+5
Ligne n+6
Ligne n+7
Ligne n+8

**FIG 8g**  Point de vue n°7/8

Ligne n
Ligne n+1
Ligne n+2
Ligne n+3
Ligne n+4
Ligne n+5
Ligne n+6
Ligne n+7
Ligne n+8

**FIG 8h**  Point de vue n°8/8

| R 11R | V 21V | B 11B | R 21R | V 11V | B 21B | R 12R | V 22V | B 12B | R 22R | V 12V | B 22B | R 13R | V 23V | B 13B |
| V 11V | B 21B | R 11R | V 21V | B 11B | R 21R | V 12V | B 22B | R 12R | V 22V | B 12B | R 22R | V 13V | B 23B | R 13R |
| B 11B | R 21R | V 11V | B 21B | R 11R | V 21V | B 12B | R 22R | V 12V | B 22B | R 12R | V 22V | B 13B | R 23R | V 13V |
| R 11R | V 21V | B 11B | R 21R | V 11V | B 21B | R 12R | V 22V | B 12B | R 22R | V 12V | B 22B | R 13R | V 23V | B 13B |

FIG 9 N=2

| R 11R | V 21V | B 11B | R 21R | V 11V | B 21B | R 12R | V 22V | B 12B | R 22R | V 12V | B 22B | R 13R | V 23V | B 13B |
| R 21R | V 11V | B 21B | R 11R | V 21V | B 11B | R 21R | V 12V | B 22B | R 12R | V 22V | B 12B | R 22R | V 13V | B 23B |
| R 11R | V 21V | B 11B | R 21R | V 11V | B 21B | R 12R | V 22V | B 12B | R 22R | V 12V | B 22B | R 13R | V 23V | B 13B |
| R 21R | V 11V | B 21B | R 11R | V 21V | B 11B | R 21R | V 12V | B 22B | R 12R | V 22V | B 12B | R 22R | V 13V | B 23B |

FIG 10a N=2

FIG 10b

FIG 10c

**FIG11 N=3**

L1 RL L2 L3 L4 L5

| | | P1 | | | P2 | | | P3 | | | P4 | | | P5 | |
|---|---|---|---|---|---|---|---|---|---|---|---|---|---|---|---|
| Ligne n | R 11R | V 21V | B 31B | R 12R | V 22V | B 32B | R 13R | V 23V | B 33B | R 14R | V 24V | B 34B | R 15R | V 25V | B 35B | R 16R |
| Ligne n+1 | V 11V | B 21B | R 31R | V 12V | B 22B | R 32R | V 13V | B 23B | R 33R | V 14V | B 24B | R 34R | V 15V | B 25B | R 35R | V 16V |
| Ligne n+2 | B 11B | R 21R | V 31V | B 12B | R 22R | V 32V | B 13B | R 23R | V 33V | B 14B | R 24R | V 34V | B 15B | R 25R | V 35V | B 16B |
| Ligne n+3 | R 11R | V 21V | B 31B | R 12R | V 22V | B 32B | R 13R | V 23V | B 33B | R 14R | V 24V | B 34B | R 15R | V 25V | B 35B | R 16R |
| Ligne n+4 | V 11V | B 21B | R 31R | V 12V | B 22V | R 32R | | | | | | | | | | |

**FIG12 N=9**

L1 RL L2 L3

| | | | | | | | | | | | | | | | | | | |
|---|---|---|---|---|---|---|---|---|---|---|---|---|---|---|---|---|---|---|
| Ligne n | R 11R | V 21V | B 31B | R 41R | V 51V | B 61B | R 71R | V 81V | B 91B | R 12R | V 22V | B 32B | R 42R | V 52V | B 62B | R 72R | V 82V | B 92B |
| Ligne n+1 | V 11V | B 21B | R 31R | V 41V | B 51B | R 61R | V 71V | B 81B | R 91R | V 12V | B 22B | R 32R | V 42V | B 52B | R 62R | V 72V | B 82B | R 92R |
| Ligne n+2 | B 11B | R 21R | V 31V | B 41B | R 51R | V 61V | B 71B | R 81R | V 91V | B 12B | R 22R | V 32V | B 42B | R 52R | V 62V | B 72B | R 82R | V 92V |
| Ligne n+3 | R 11R | V 21V | B 31B | R 41R | V 51V | B 61B | R 71R | V 81V | B 91B | R 12R | V 22V | B 32B | R 42R | V 52V | B 62B | R 72R | V 82V | B 92B |

| | R 13R | V 23V |
|---|---|---|
| Ligne n | R 13R | V 23V |
| Ligne n+1 | V 13V | B 23B |
| Ligne n+2 | B 13B | R 23R |
| Ligne n+3 | R 13R | V 23V |

EP 1 779 181 B1

**FIG13 N=3**

| | L1 | RL | L2 | | | L3 | | | L4 | | | L5 | | | L6 | | | | | | |
|---|---|---|---|---|---|---|---|---|---|---|---|---|---|---|---|---|---|---|---|---|---|
| n | R 11R | V 21V | B 31B | R 12R | V 22V | B 32B | R 13R | V 23V | B 33B | R 14R | V 24V | B 34B | R 15R | V 25V | B 35B | R 16R | V 26V | B 36B | R 17R | | | |
| n+1 | R 30R | V 11V | B 21B | R 31R | V 12V | B 22B | R 32R | V 13V | B 23B | R 33R | V 14V | B 24B | R 34R | V 15V | B 25B | R 35R | V 16V | B 26B | R 36R | | | |
| n+2 | R 20R | V 30V | B 11B | R 21R | V 31V | B 12B | R 22R | V 32V | B 13B | R 23R | V 33V | B 14B | R 24R | V 34V | B 15B | R 25R | V 35V | B 16B | R 26R | | | |
| n+3 | R 11R | V 21V | B 31B | R 12R | V 22V | B 32B | R 13R | V 23V | B 33B | R 14R | V 24V | B 34B | R 15R | V 25V | B 35B | R 16R | V 26V | B 36B | R 17R | V 27V | B 37B | R 18R |

α ℓ R L d

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 697163 A

- WO 0010332 A